(19) Europäisches Patentamt
European Patent Office
Office européen des brevets

(11) **EP 2 518 632 A1**

# EUROPEAN PATENT APPLICATION
published in accordance with Art. 153(4) EPC

(43) Date of publication:
**31.10.2012 Bulletin 2012/44**

(21) Application number: **09852565.2**

(22) Date of filing: **25.12.2009**

(51) Int Cl.:
**G06F 12/08** (2006.01)

(86) International application number:
**PCT/JP2009/071594**

(87) International publication number:
**WO 2011/077549 (30.06.2011 Gazette 2011/26)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Fujitsu Limited
Kawasaki-shi, Kanagawa 211-8588 (JP)**

(72) Inventors:
• **HIKICHI, Toru
Kawasaki-shi
Kanagawa 211-8588 (JP)**

• **ISHIMURA, Naoya
Kawasaki-shi
Kanagawa 211-8588 (JP)**

(74) Representative: **Stebbing, Timothy Charles
Haseltine Lake LLP
300 High Holborn
London WC1V 7JH (GB)**

(54) **COMPUTATIONAL PROCESSING DEVICE**

(57) There is provided a processor that includes: a first storage unit that stores a portion of data stored in a main storage unit; a processing unit that outputs an instruction for loading data stored in the main storage unit into the first storage unit; a second storage unit that receives an instruction, and that holds the instruction until the first storage unit receives the data requested by the instruction from the main storage unit; a first control unit that receives an instruction from the processing unit, and that performs control so that, when the data requested by the received instruction is stored in the first storage unit, the requested data is read from the first storage unit and transferred to the processing unit but, when the data requested by the received instruction is not stored in the first storage unit, and when an instruction requesting the same data as the data requested by the received instruction is not found in the second storage unit, the received instruction is transferred to the main storage unit; and a second control unit that receives an instruction from the processing unit, and that performs control so that, when an instruction requesting the same data as the data requested by the received instruction is stored in the second storage unit, processing for reading the requested data from the main storage unit by the received instruction is completed.

FIG.1

EP 2 518 632 A1

## Description

FIELD

The present invention relates to a processor.

BACKGROUND

Many recent processors employ pipelining techniques in order to enhance processing speeds. Examples of such processors include CPUs (Central Processing Units), DSPs (Digital Signal Processors), and GPUs (Graphics Processing Units). A processor that employs pipeline processing has a plurality of pipelines (instruction control pipeline, arithmetic pipeline, branch control pipeline, etc.) for implementing its function. Each pipeline is divided into a plurality of stages. Each stage contains a circuit unit that performs a prescribed step, and the circuit unit operates so that the prescribed step assigned to the stage is completed within a period referred to as cycle time which is the reciprocal of the operating frequency. An output signal from each preceding stage or step is used, for example, as an input signal to the succeeding stage or step.

As the processor operating frequency increases, the access time from processor to memory becomes relatively long compared with the processing time within the processor. To address this, the processor is equipped with a small-capacity, high-speed memory, referred to as cache memory, in order to reduce the access time from the processor to the main storage unit.

The cache memory is provided or a layer above the main storage unit, and holds a portion of the data stored in the main storage unit. The cache memory is built into the processor or is placed in a position closer to the processor than to the main storage unit. As a result, when the processor accesses data that is found in the cache memory (hereinafter referred to as "cache hit"), the processor can access the target data in a shorter time. On the other hand, when the processor accesses data that is not found in the cache memory (hereinafter referred to as "cache miss"), the access time to the target data becomes longer because the processor has to read the data from a memory provided on a layer below the cache memory. To avoid a cache miss, a memory controller for the cache memory performs control so that the data frequently accessed by the processor is held in the cache memory and so that the data less frequently accessed is transferred out of the cache memory into a memory provided at a lower layer.

The processor further includes a processing unit for performing computational processing and a register for holding data that the processing unit receives from the cache memory. The register is a storage device smaller and faster than the cache memory, and is provided, for example, or a layer above the cache memory.

Before issuing a load instruction for loading data from the cache memory into the register, the processing unit issues, based on the load instruction, a prefetch instruction to the memory controller in order to load the data from the main storage unit into the cache memory. Issuing the prefetch instruction to the memory controller ahead of the load instruction serves to reduce data access time, because a cache miss does not occur when the processor loads the data from the cache memory.

PRIOR ART DOCUMENTS

Patent Documents

    Patent document 1: Japanese Laid-open Patent Publication No. 2006-40090
    Patent document 2: Japanese Laid-open Patent Publication No. 2000-339157

SUMMARY

After loading the data from the cache memory into the register, the processing unit performs various kinds of processing. The cache line size of the cache memory is larger than the size of data that can be held in the register. For example, a plurality of items of data, each specified by an address, are held in one cache line.

The load instruction is not an instruction for loading all the data held in one cache line of the cache memory into the register, but an instruction for loading the data specified on an address basis from the cache line into the register. While the load instruction that the processing unit issues to the register is an instruction for loading data on a per address basis into the register, the prefetch instruction which is equivalent to loading data from the main storage unit to the cache memory is an instruction for loading data on a cache line basis. As a result, when, for example, two load instructions are issued each for an address held in the same cache line, two prefetch instructions created based on the two load instructions attempt to read the data to be held in the same cache line from the main storage unit at two separate times.

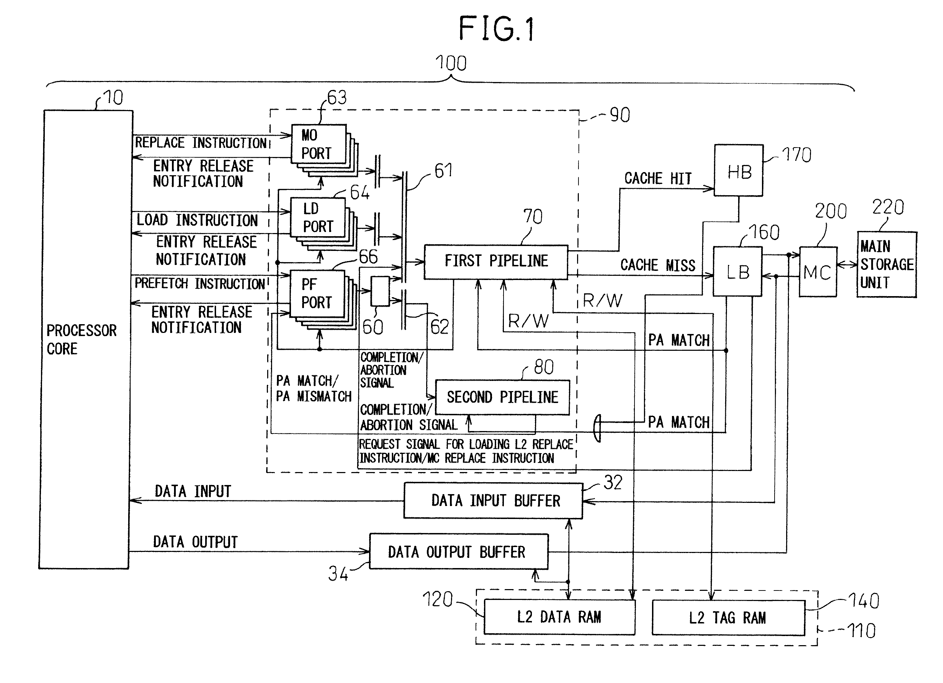

In this case, since the data is loaded from the main storage unit by the first prefetch instruction, data loading from the main storage unit is not performed in response to the next prefetch instruction because a cache hit occurs here. A decision as to whether a cache hit has occurred or not is performed by pipeline processing in a cache controller (which is not a memory controller described with reference to Fig. 1, but corresponds to a first pipeline in Fig. 1). After the data has been loaded from the main storage unit into the cache memory, if a prefetch instruction is issued, the cache controller again performs a cache hit decision. When the data is stored in the cache memory, if a plurality of prefetch instructions occur for the stored data, the execution of other store or load instructions has to wait, resulting in an increase in access time to the main storage unit.

The processing apparatus disclosed herein aims to reduce the access time to the main storage unit.

The processing apparatus (processor) disclosed herein is a processing apparatus connected to a main storage unit and includes: a first storage unit which stores a portion of data stored in the main storage unit; a processing unit which outputs an instruction for loading data stored in the main storage unit into the first storage unit; a second storage unit which receives an instruction, and which holds the instruction until the first storage unit receives the data requested by the instruction from the main storage unit; a first control unit which receives an instruction from the processing unit, and reads the data requested by the received instruction from the first storage unit and transfers it to the processing unit, if the requested data is stored in the first storage unit, or else, transfers the received instruction to the main storage unit, if the requested data is not stored in the first storage unit and an instruction requesting the same data as the requested data is not found in the second storage unit; and a second control unit which receives an instruction from the processing unit, and completes processing for reading the data requested by the received instruction from the main storage unit, if an instruction requesting the same data as the requested data is stored in the second storage unit.

The processing apparatus disclosed herein has the effect of shortening the access time to the main storage unit.

BRIEF DESCRIPTION OF DRAWINGS

Fig. 1 is a diagram illustrating one example of the hardware configuration of a processing apparatus.
Fig. 2 is a diagram illustrating one example of the hardware configuration of a processor core.
Fig. 3 is a diagram illustrating by way of example the capacity of memory for which a load instruction or a prefetch instruction is issued.
Fig. 4 is a diagram illustrating one example of an L2 cache RAM of the type not divided into banks.
Fig. 5 is a diagram illustrating one example of an L2 cache RAM of the type divided into banks.
Fig. 6 is a diagram illustrating one example of a prefetch port.
Fig. 7 is a diagram illustrating one example of a pipeline selector.
Fig. 8 is a diagram illustrating another example of a pipeline selector.
Fig. 9A is a diagram illustrating one example of a load buffer.
Fig. 9B is a diagram illustrating one example of the load buffer.
Fig. 10A is a diagram illustrating one example of a hit buffer.

Fig, 10B is a diagram illustrating one example of the hit buffer.
Fig. 11 is a time chart illustrating one example of the processing performed by first and second pipelines.
Fig. 12 is a diagram illustrating one example of the processing performed by the first and second pipelines for the case of the L2 cache RAM divided into banks.

DESCRIPTION OF EMBODIMENTS

Embodiment of a processing apparatus as a processor will be described below with reference to the drawings.

<Hardware configuration of the processing apparatus>

Fig. 1 is a diagram illustrating one example of the hardware configuration of the processing apparatus. The processing apparatus 100 illustrated in Fig. 1 includes a processor core 10 as a processing unit, an L2 cache controller (Level-2 cache controller) 90, an L2 tag RAM (Level-2 tag random access memory) 140, an L2 data RAM (Level-2 data random access memory) 120, a load buffer (LB) 160, and a memory controller (MC) 200. The processing apparatus 100 may further include a hit buffer (HB) 170, as depicted in Fig. 1. The processor core 10 is connected to a main storage unit 220 via the MC 200. In this specification, the L2 data RAM 120 and the L2 tag RAM 140 will be collectively referred to as the "L2 cache RAM 110".

The processing apparatus 100 of Fig. 1 is further provided with a data input buffer 32 and a data output buffer 34. The data input buffer 32 is used for buffering data from the main storage unit 220 or the L2 cache RAM 110 for transfer to the processor core 10. On the other hand, the data output buffer 34 is used for buffering data output from the processor core 10. The data buffered in the data output buffer 34 is transferred to the L2 cache RAM 110 or the main storage unit 220.

The various parts depicted in Fig. 1 will be described in detail with reference to other drawings pertaining to the respective parts.

[Processor core]

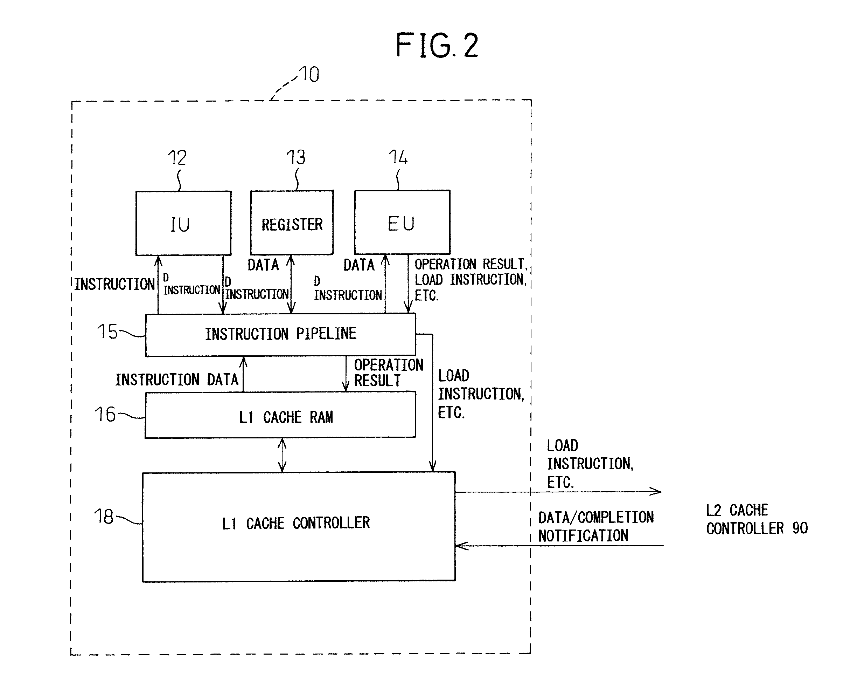

Fig. 2 is a diagram illustrating one example of the hardware configuration of the processor core. The processor core 10 includes an instruction unit (IU) 12, an execution unit (EU) 14, an L1 cache controller 18, and an L1 cache RAM (Level-1 cache random access memory) 16.

The L1 cache RAM 16 holds instructions, data, etc. The L1 cache controller 18 controls access to the L1 cache RAM 16. In Fig. 1, the processing apparatus 100 is depicted as including only one processor core, but the number of processor cores is not limited to the one depicted in Fig. 1, and the processing apparatus 100 may include more than one processor core.

[Processor core: Instruction unit]

The instruction unit 12 decodes an instruction read out of the L1 cache RAM 16 via an instruction pipeline 15, and delivers the decoded instruction to the execution unit 14 via the instruction pipeline 15. For example, the instruction unit 12 supplies a "load instruction" or a "store instruction" (designated "LOAD INSTRUCTION, ETC." in the figure) to the L1 cache controller 18 via the instruction pipeline 15. When the instruction supplied from the instruction unit 12 to the L1 cache controller 18 is, for example, the "load instruction", the L1 cache controller 18 reads from the L1 cache RAM 16 an instruction specified by the "load instruction". The instruction read out of the L1 cache RAM 16 by the "load instruction" is supplied to the instruction unit 12. The instruction read out of the L1 cache RAM 16 is, for example, a data transfer instruction or an arithmetic instruction. The data transfer instruction is an instruction that includes, for example, a load (LD) instruction, a store (ST) instruction, a prefetch (PF) instruction, and a replace (MO) instruction to the L1 cache RAM 16. The instruction unit 12 decodes the instruction read out of the L1 cache RAM 16, and supplies the decoded instruction (D INSTRUCTION in Fig. 2) via the instruction pipeline 15 to the execution unit 14 together with register address data, designated "DATA", for specifying the register 13 that stores operands to be used for the execution of the instruction and the register 13 that stores the result of the instruction execution.

[Processor core: Execution unit]

The execution unit 14 retrieves the operands from the register 13 specified by the register address, and performs an operation on the operands in accordance with the instruction decoded by the instruction unit 12. When the instruction to be executed is the data transfer instruction, the execution unit 14 generates, for example, a virtual address from the register values as the operands. When the instruction to be executed is the data transfer instruction, the execution unit 14 supplies, for example, a load instruction, a store instruction, or a PF instruction (designated "LOAD INSTRUCTION, ETC." in the figure), via the instruction pipeline 15 to the L1 cache controller 18 together with the virtual address. After executing the instruction, the execution unit 14 supplies the result of the operation to the instruction pipeline 15, and the result of the operation is thus stored via the instruction pipeline 15 into the L1 cache RAM 16.

[Processor core: L1 cache memory]

The L1 cache RAM 16 includes a translation lookaside buffer (TLB), an L1 tag RAM, and an L1 data RAM, though these are not depicted in the figure. The L1 cache controller 18 specifies the line in the L1 cache RAM 16 by the virtual address supplied from the execution unit 14, and determines whether a cache miss or a cache hit has occurred by comparing the physical addresses (PA) read from the TLB and the line in the L1 cache RAM 16, respectively, with the virtual address.

[Processor core: L1 cache controller]

If a cache miss occurs in the L1 cache RAM 16, the L1 cache controller 18 passes the LD instruction or PF instruction to the L2 cache controller 90. Then, the processor core 10 receives the data read by the LD instruction or the completion notification of the PF instruction from the L2 cache controller 90.

[Register and cache line]

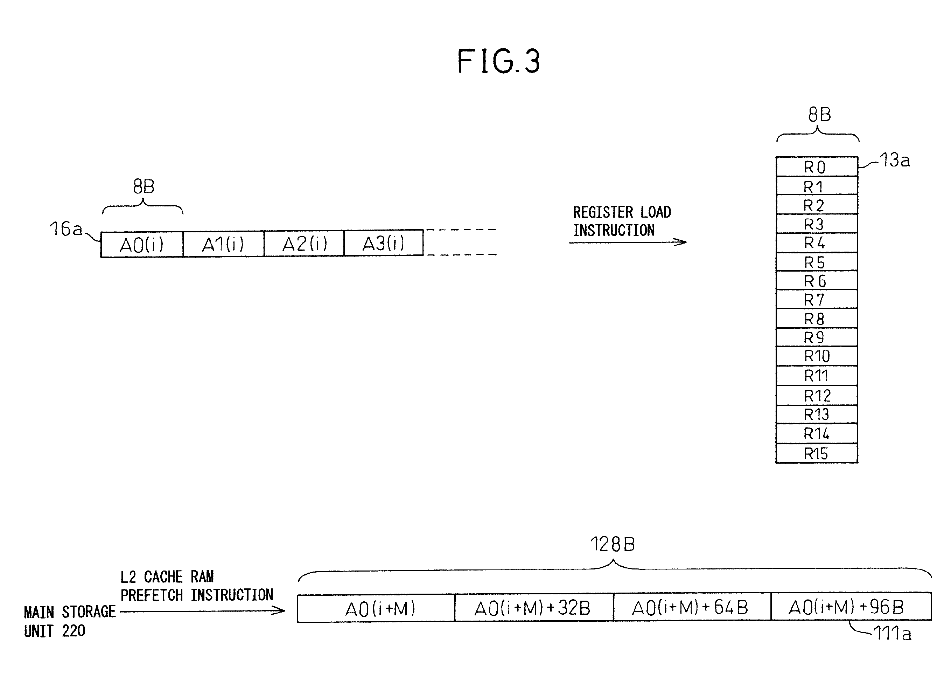

Fig. 3 is a diagram illustrating by way of example the organizations of the register and the L2 cache RAM for which the LD instruction or PF instruction is issued.
The register 13a depicted in Fig. 3 is one example of a storage area in the register 13 depicted in Fig. 2. The register 13a includes a plurality of registers specified, for example, by addresses R0 to R15, respectively. The storage capacity of each register corresponding to one address in the register 13a is 8 bytes in the example of Fig. 3.
Reference numeral 16a in Fig. 3 indicates the organization of the information stored in the L1 cache RAM 16. In Fig. 3, A0 (i), A1 (i), etc., designate addresses in the L1 cache RAM 16. One unit of information 16a is 8 bytes in the example of Fig. 3. When a load instruction to the register is issued, the execution unit 14 loads the information 16a stored in the L1 cache RAM 16 into the register 13a in units of 8 bytes.
The cache line 111a depicted in Fig. 3 is a cache line in the L2 data RAM 120 depicted in Fig. 1. The storage capacity of each cache line in the L2 data RAM 120 is 128 bytes in the example of Fig. 3. Since the storage capacity of each register is 8 bytes in the example of Fig. 3, each cache line can store data equivalent to 16 registers.
When a prefetch instruction for prefetching data to the L2 cache RAM is issued, the corresponding data stored in the main storage unit is written to the cache line 111a in the L2 data RAM 120.
In the example of Fig. 3, one cache line is divided into blocks of information of 32 bytes as designated by A0 (i+M), A0 (i+M)+32B, A0(i+M)+64B, and so on.

[Program for outputting LD instruction or PF instruction]

By executing a program, the execution unit 14 prefetches the data to be loaded by the LD instruction and stores the data in advance into the L2 cache RAM 110. In the case where the data to be loaded into the register 13a by the LD instruction is prefetched into a cache line in the L2 cache RAM 110 in units of 128 bytes, the data for the registers of addresses R0 to R15 can be stored into the cache line 111a by a single prefetch operation.

However, if the PF instruction is to be issued so that the prefetch to one cache line can be accomplished by a single prefetch operation, special operations and branch conditions will have to be added to the program to be executed by the execution unit 14, and this will reduce the execution efficiency of the execution unit 14.

The following program A is one example of the program containing LD and PF instructions.

PROGRAM A

```
// load data i=0 before entering LOOP
(S0) load data of address A0 (0) and store in R4;
(S1) load data of address A1 (0) and store in R5;
(S2) load data of address A2(0) and store in R6;
(S3) load data of address A2(0) and store in R7;
(LOOP SECTION)
(S4) LOOP: // for (i = 0 < N; i ++)
(S5) move data loaded one loop before from address
A0 (i) into R4 to R0;
(S6) move data loaded one loop before from address
A1 (i) into R5 to R1;
(S7) move data loaded one loop before from address
A2 (i) into R6 to R2;
(S8) move data loaded one loop before from address
A3(i) into R7 to R3;
(S9) prefetch data into L2 cache RAM 110 from address A0 (i+M) M loops ahead;
(S10) prefetch data into L2 cache RAM 110 from
address A4(i+M) M loops ahead;
(S11) load data of address A0 (i+1) one loop ahead
and store in R4;
(S12) load data of address A1 (i+1) one loop ahead
and store in R5;
(S13) load data of address A2(i+1) one loop ahead
and store in R6;
(S14) load data of address A3 (i+1) one loop ahead
and store in R7;
(S15) perform operation by referencing R0, R1, R2,
and R3 and store operation result in R8;
(S16) store operation result R8 at address A4 (i);
(S17) GOTO LOOP; // if i = N-1 then exit LOOP
(END SECTION) // N-th LOOP
(S18) move data loaded in final loop of LOOP from
address A0 (N) into R4 to R0;
(S19) move data loaded in final loop of LOOP from
address A1 (N)into R5 to R1;
(S20) move data loaded in final loop of LOOP from
address A2 (N) into R6 to R2;
(S21) move data loaded in final loop of LOOP from
address A3 (N) into R7 to R3;
(S22) perform operation by referencing R0, R1, R2,
and R3 and store operation result in R8;
```

(S23) store operation result R3 at address A4 (N);

The program A is a program that executes the LD instruction by cycling through a loop and that performs an operation on the data loaded into the register by the LD instruction and stores the result of the operation into the register. The program A successively references data in a continuous address space, performs operations using the referenced data, and successively stores the results of the operations in a different address area. This address space is usually accessed from the program by using a virtual address (VA). The virtual address is translated into a physical address (PA) by the MMU (TLB), and the L2 cache is accessed by using the PA. Generally, if the virtual addresses are contiguous, it does not necessarily follow that the physical addresses are also contiguous. However, in recent years, with dramatic reductions in memory cost, a relatively large page size, for example, a page size of 4 MB, has come to be employed by considering performance demands rather than the efficient utilization of memory; therefore, it does not present any problem if it is assumed that the addresses are also contiguous in the physical address space.

It is assumed here that the addresses that the program references lie within the range of A0 (0), A1 (0), A2(0), A3(0), A0 (1), A1 (1), A2 (1), A3 (1), ..., A0 (N), A1 (N) , A2(N), A3(N).

It is also assumed that these addresses are arranged with uniform spacing (at intervals of 8 bytes) as indicated below.

```
Address A0 (i) = A0(i)+OB
Address A1 (i) = A0(i)+8B
Address A2 (i) = A0(i)+16B
Address A3 (i) = A0(i)+24B
Address A0 (i+1) = A0 (i)+32B
Address A1 (i+1) = A0 (i)+40B
Address A2(i+1) = A0 (i)+ 48B
Address A3 (i+1) = A0(i)+56B
                 .
                 .
                 .
Address A0 (i+2) = A0 (i)+64B
                 .
                 .
                 .
Address A0 (i+3) = A0(i)+96B
Address A0 (i+4) = A0(i)+128B
```

In this way, the program loads the data in sequence starting from the address A0 (i). Data of four addresses (A0 (i) to A3(i)), i.e., 32 bytes of data, are loaded during each cycle around the loop. Since the address A0 (i+4) to be loaded four loops ahead is A0 (i)+128B, it follows that data equivalent to the cache line size of 128B are loaded in four cycles around the loop.

On the other hand, the prefetch is issued four times during the four cycles of the loop, as indicated below.

> Address A0 (i+M)
> Address A0 (i+1+M) = A0 (I+M)+3B
> Address A0(i+2+M) = A0 (I+M)+64B
> Address A0(i+3+M) = A0 (I+M)+96B

Steps S0 to S3 define the process in which data i=0, that is, the data of addresses A0(0) to A3(0), are loaded and stored in the registers R4 to R7, respectively, before entering the loop. In the first cycle of the loop, the data of addresses A0 (0), A1 (0), A2(0), and A3(0) for i=0 are not loaded. Therefore, in 50 to S3, the data of these addresses are loaded before entering the loop.

Steps S4 to S17 define the loop process. Steps S5 to S8 define the process in which the data loaded one loop before from addresses A0 (i) to A3(i), and stored in the registers R4 to R7, are moved to the registers R0 to R3, respectively. S11 to S14 define the LD instruction that loads the data of addresses A0 (i+1) to A3 (i+1) and stores the data in the registers R4 to R7, respectively. With the loop statement (S4), the data stored at addresses A0 (i) to A3 (i) (i = 0 to N) are sequentially stored in the registers specified by the addresses R4 to R7, respectively. Since i is incremented, the data stored at addresses A0 (i) to A3 (i) are sequentially stored in the registers of addresses R4 to R7 during each cycle of the loop by performing steps S5 to S8 and S11 to S14.

For example, suppose that the data specified by the addresses A0 (i) to A3 (i) are arranged in blocks of 8 bytes as indicated in the cache line 16a of Fig. 3. Since the number of registers at the store target addresses R4 to R7 specified by the LD instruction in S11 to S14 is four, data equivalent to 8B x 4 = 32B are loaded from the addresses A0 (i) to A3(i) and stored in the registers of the addresses R4 to R7 during each cycle of the loop.

In step S9, the data of address A0 (i+M) M loops ahead is prefetched from the main storage unit 220 into the L2 cache RAM 110. The prefetch instruction is an instruction that predicts the data to be loaded by the LD instruction and loads the data from the main storage unit 220 into the L2 cache RAM 110 ahead of time. In step S9, the data of address predicted to be loaded and stored M loops ahead in the loop process (S4 to S17) is prefetched. The value of M is determined by the following equation 1.

$$M \times T1 \geq T2 \ \ldots \ (1)$$

T1: Time taken to complete one cycle of loop (Number of clock cycles)
T2: Time that elapses from issuance of PF instruction until data is stored in L2 cache (Number of clock cycles)

By setting the value of M sufficiently large to satisfy the equation 1, the effect of the prefetch to hide the access time to the main storage unit 220 is maximized.

The prefetch in step S9 is performed to prefetch the data that becomes necessary in the load process of S11 to S14. That is, in S9 of the program A, data equivalent to 8B x 4 = 32B is prefetched by one PF instruction execution. Since each cache line in the L2 data RAM has a data capacity of 128B, as indicated in the cache line 111a in Fig. 3, if the prefetch is performed in units of 128B, data equivalent to one cache line in the L2 data RAM will be loaded from the main storage unit 220 by one PF instruction execution. However, in the program A, the PF instruction defined in S9 is executed once in every loop. As a result, four prefetch instructions PF1 to PF4 occur for the same cache line of 128B such as the cache line 111a depicted in Fig. 3. However, since one prefetch is effective for one cache line, i.e., the entire line of 128B, it follows that the remaining three prefetches are needlessly performed.

One possible approach to addressing this problem would be to write the program so that needless prefetches would not occur, but in this case, the programmer would need to know the cache line size (128B in the example of Fig. 3), to begin with. Suppose that the programmer knows the cache line size; then, in the case where a prefetch is performed on a line-by-line basis, i.e., in units of 128 bytes, and where 32 bytes of data are loaded during one loop, the prefetch instruction can be issued once in every four loops by making provisions within the loop to add an instruction that issues a prefetch only when the loop variable, i, divided by 4 yields a remainder of 0. However, since such an instruction requires that an operation for calculating the remainder and a conditional branch be added within the loop, the instruction execution efficiency drops more significantly than when issuing the PF instruction once in every loop.

Step S10 defines a prefetch for store. The address A4(i+M) indicates the store address. In this embodiment, it is assumed that the address that stores the operation result lies within the range of A4(0), A4 (1), ..., A4(N).

It is also assumed that the store addresses are arranged with the following spacing.

> Address A4 (i) = AO(i)+OB
> Address A4 (i+1) = A0 (i) +8B
> .
> .
> .
> .
> Address A4 ( i+2) = A0 (i) +16B
> Address A4 (i+16) = A0 (i)+128B

In this way, the program A stores the operation results in sequence starting with the address A4(i). Further, the address A4(i+16) 16 loops ahead is A4(i)+128B, which means that data equivalent to the cache line size of 128B are accessed in 16 cycles around the loop.

Further, the prefetch instruction is issued 16 times during the 16 cycles of the loop, as indicated below.

Address A0 (i+M)
Address A0 (i+1+M) = A0 (I+M)+8B
.
.
.
Address A0(i+2+M) = A0(1+M)+16B
Address A0(I+15+M) = A0(1+M)+128B

In the case of store, since the addresses are set at intervals of 8 bytes, data is written to one register each time around the loop. As a result, as illustrated in Fig. 3, in the case of a store to an 8-byte register, an 8-byte store is performed in every loop. The prefetch for store (S10) is also performed once in every loop. Since each cache line in the L2 data RAM has a data capacity of 128B, as indicated in the cache line 111a in Fig. 3, if the prefetch is performed in units of 128B, data equivalent to 128B will be loaded from the main storage unit 220 by one PF instruction execution. However, in the program A, since the PF instruction is executed once in every loop, 16 prefetches occur for the same cache line of 128B such as the cache line 111a depicted in Fig. 3. This means that the prefetch instruction is issued needlessly 15 more times than when the prefetch size is 128B.

The load process performed in S11 to S14 in the loop and the operation process performed by using the data loaded one loop before can be executed concurrently because there is no dependency between them; concurrent execution of these processes has the effect of hiding the access time needed to access the L2 cache RAM 110 when a cache miss occurs in the L1 cache RAM 16. In the program A, S15 defines the process in which an operation is performed using the data stored in the registers R0 to R3, and the operation result is stored in the register R8. In S16, the operation result held in the register R8 is stored at the store address A4(i).

In S17, it is determined whether i is equal to N-1. If i is not equal to N-1, the process returns to S4 to repeat the loop. On the other hand, if i = N-1, the process exits the loop and proceeds to S18.

S18 to S23 define the process in which the data loaded from the addresses A0(N) to A3(N) and stored in the registers R4 to R7 are moved to the registers R0 to R3, respectively. The addresses A0(N) to A3(N) are the last addresses in the reference range, and there is no need to load the addresses of i = N+1. Then, in S22, an operation is performed using the data moved to the registers R0 to R3, and the operation result is stored in the register R8. In S23, the operation result obtained in S22 is stored at the store address A4(N).

If a plurality of prefetches occur for the same cache line for which a prefetch has already occurred, as described with reference to Fig. 3 and the program A above, such needless PF instructions cause congestion of the first pipeline 70 in the L2 cache controller. In the present embodiment, such congestion is avoided using a second pipeline 80.

[L2 cache RAM of the type not divided into banks]

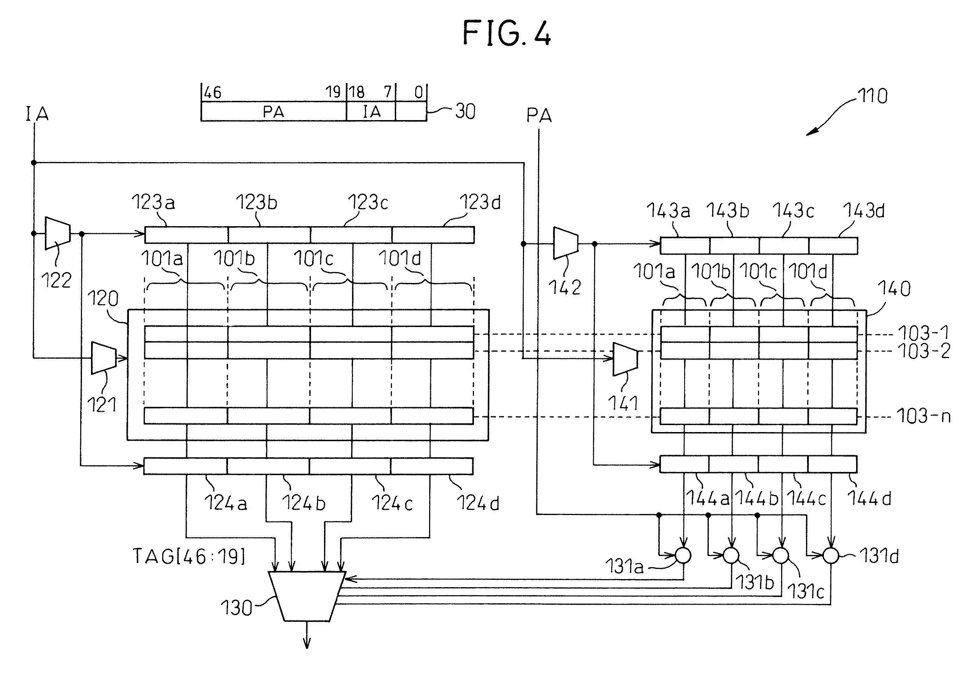

Fig. 4 is a diagram illustrating one example of an L2 cache RAM of the type not divided into banks. The L2 cache RAM 110 depicted in Fig. 4 is, for example, a 4-way set associative cache memory. As illustrated in Fig. 4, the L2 cache RAM 110 is divided into a plurality of sets, and each set is divided into cache ways 101a to 101d and managed on a cache way basis.

In the L2 cache RAM 110 depicted in Fig. 4, the data held in the L2 cache RAM 110 are managed in units called cache lines 103-1 to 103-n. Reference numeral 30 in Fig. 4 indicates a request instruction which is output from the processor core. The request instruction 30 is, for example, 47 bits long, of which the 28 high-order bits (46-19+1 bits) constitute a tag address portion of the physical address, the next 12 bits at bit positions 18 to 7 (18-7+1 bits) constitute an index address (IA) portion of the physical address, and the 7 low-order bits constitute an address portion of the physical address that indicates a given position within one line of 128 bytes.

Each cache line is specified, for example, by a PA (physical address) into which the L1 cache controller has translated the VA (virtual address) included in the LD instruction or PF instruction issued by the processor core 10.

The L2 cache RAM 110 includes, in addition to the L2 tag RAM 140 and the L2 data RAM 120, write amplifiers 123a to 123d and 143a to 143d, sense amplifiers 124a to 124d and 144a to 144d, comparator circuits 131a to 131d, and selector circuits 121, 122, 141, and 142. The L2 tag RAM 140 and the L2 data RAM 120 each have a plurality of entries corresponding to the respective cache lines 103-1 to 103-n. A portion of the physical address, called a "tag", is held at each entry in the L2 tag RAM 140. The "tag" corresponds to the tag address of the request instruction 30 depicted in Fig. 4. Since the L2 cache RAM 110 illustrated in Fig. 4 has four ways, the associativity is "4". Accordingly, four cache lines and four tags are specified by one index address.

The L2 cache RAM 110 further includes a selector circuit 130. The selector circuit 130 takes as inputs the data output from the L2 data RAM 120 via the sense amplifiers 124a to 124d and selects one of the inputs for output in accordance with the value of a hit way signal supplied from the comparator circuits 131a to 131d.

"Data" identifiable by a "tag" held in the L2 tag RAM 140 is stored at each entry in the L2 data RAM 120.

The index address IA is supplied to the L2 tag RAM 140. The entry, i.e., the tag address, of each of the ways 101a to 101d corresponding to the supplied index address is supplied to the comparator circuits 131a to 131d corresponding to the respective ways.

The comparator circuits 131a to 131d are each a circuit that determines whether a cache miss or a cache hit has occurred by comparing the tag address PA transferred from the processor core 10 with the tag address read out of the L2 tag RAM 140. The comparator circuits 131a to 131d are associated with the respective cache ways 101a to 101d. Only the comparator circuit associated with the way for which the matching of the tags has been detected, i.e., the way where a cache hit has occurred, outputs a 1, while the other comparator circuits each output a 0. As a result, the comparator circuits 131a to 131d together output a 4-bit hit way signal in which the bit corresponding to the cache-hit way is set to "1", and this hit way signal is supplied to the selector circuit 130. In the case of a cache miss, an operation is performed to access the main storage unit and retrieve the data from the designated physical address.

In the case of a cache hit, if the memory access request is a read request, the data values of the four cache lines in each cache way are read out from the cache lines in the L2 data RAM 120 specified by the IA, and supplied to the selector circuit 130. Then, the selector circuit 130 selects for output the data value corresponding to the way indicated by the hit way signal supplied from the comparator circuits 131a to 131d.

[L2 cache RAM of the type divided into banks]

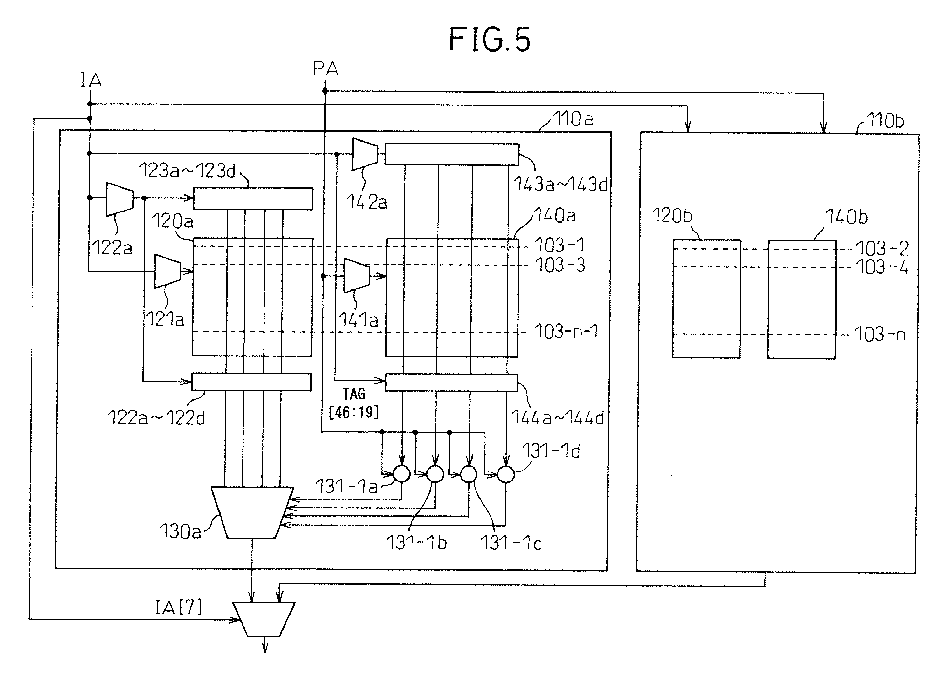

Fig. 5 is a diagram illustrating one example of an L2 cache RAM of the type divided into banks. L2 cache RAMs 110a and 110b in Fig. 5 are each identical in configuration to the L2 cache RAM 110 of Fig. 4, and therefore, their configuration will not be further described herein. While, in the example of Fig. 4, each cache line in the L2 cache RAM is specified by a 12-bit index address, the L2 cache RAMs 110a and 110b in Fig. 5 are arranged in banks by the least significant bit of the 12-bit index address. In the example of Fig. 5, the L2 cache RAM 110a stores data specified by an index address whose least significant bit is "0", while the L2 cache RAM 110b stores data specified by an index address whose least significant bit is "1".

The L2 cache RAMs 110a and 110b each hold data of the size equal to one half of the size of the data held in the L2 cache RAM 110 of Fig. 4. The data of the cache lines in the L2 cache RAM 110a, 110b specified by the index address and the least significant bit (IA[7]) of the index address are input to the selector circuits. Then, the selector circuit selects for output the output data of the L2 cache RAM corresponding to the least significant bit of the index address.

[L2 cache controller]

The L2 cache controller 90 depicted in Fig. 1 includes a MO port (Move-Out Port) 63, an LD (Load) port 64, a PF (Prefetch) port 66, a pipeline selector 60, a first priority control circuit 61, and a second priority control circuit 62.

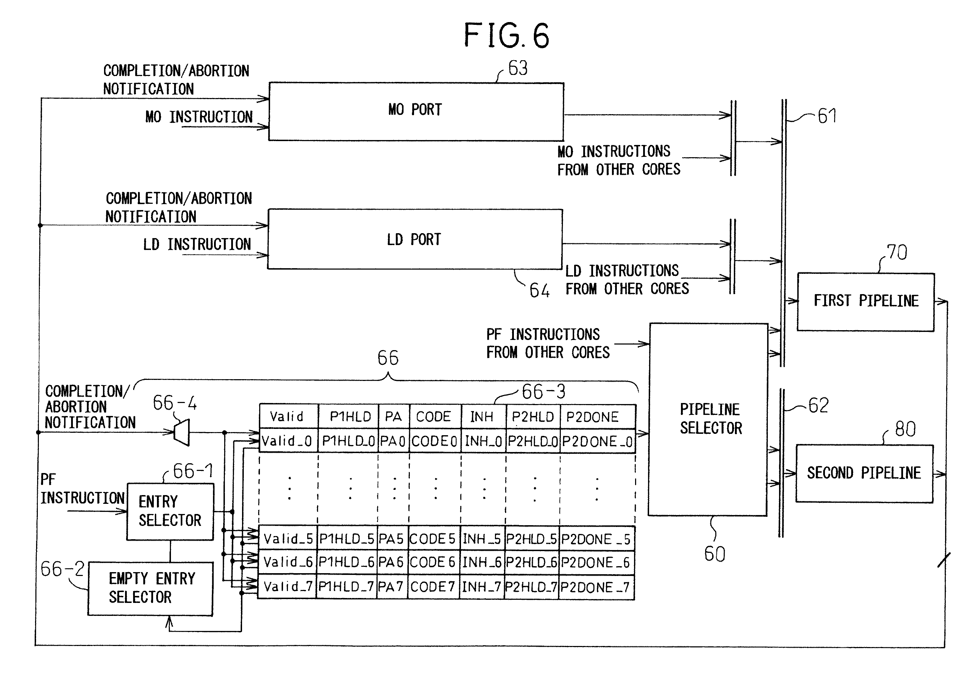

A replace instruction from the MO port 63, a load instruction from the LD port 64, and a prefetch instruction from the PF port 66 are input to the first priority control circuit 61. As illustrated in Fig. 6, if the processing apparatus includes a plurality of processor cores, the instructions output from other cores are also input to the first priority control circuit 61. The first priority control circuit 61 makes a selection based on the type of each received request and on fixed priority. As an example, the priority is in the order of the load instruction, the replace instruction, and the prefetch instruction. By thus setting the priority, a deadlock or livelock situation can be prevented.

The prefetch instruction issued from the processor core is also input to the second priority control circuit 62. The L2 cache controller 90 further includes the first pipeline 70 and the second pipeline 80. The second pipeline 80 is a pipeline dedicated to prefetch processing, and more specifically, a pipeline provided for detecting a match or mismatch between the address held in the LB 160 and the address specified by the prefetch request. By providing such a dedicated pipeline, the prefetch processing throughput and processing performance of the L2 cache can be enhanced.

[L2 cache controller: MO port, LD port, and PF port]

The MO port 63, the LD port 64, and the PF port 66 are provided for each processor core 10, and there are as many such ports as there are processor cores 10. Accordingly, when there are a plurality of processor cores 10, there are provided as many MO ports 63, LD ports 64, and PF ports 66 as the number of processor cores.

The MO port 63 receives an L1 replace instruction (designated "REPLACE INSTRUCTION" in the figure) from the processor core 10 and holds it and, when the L1 replace instruction is selected by the first priority control circuit 61, outputs the L1 replace instruction on the first pipeline 70.

The LD port 64 receives an LD instruction (designated "LOAD INSTRUCTION" in the figure) from the processor core 10 and holds it and, when the LD instruction is selected by the first priority control circuit 61, outputs the LD instruction on the first pipeline 70.

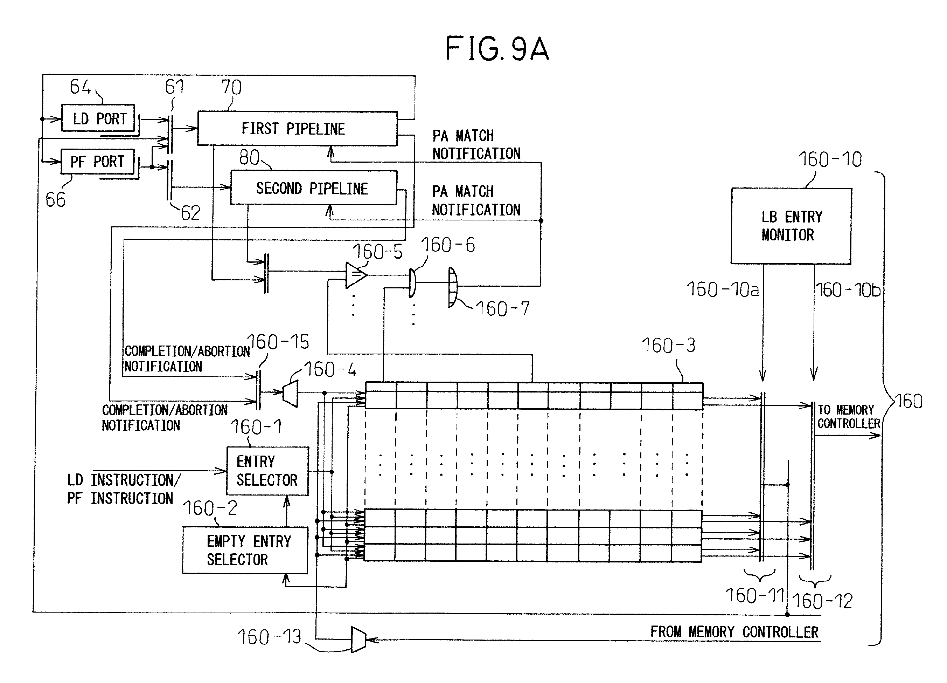

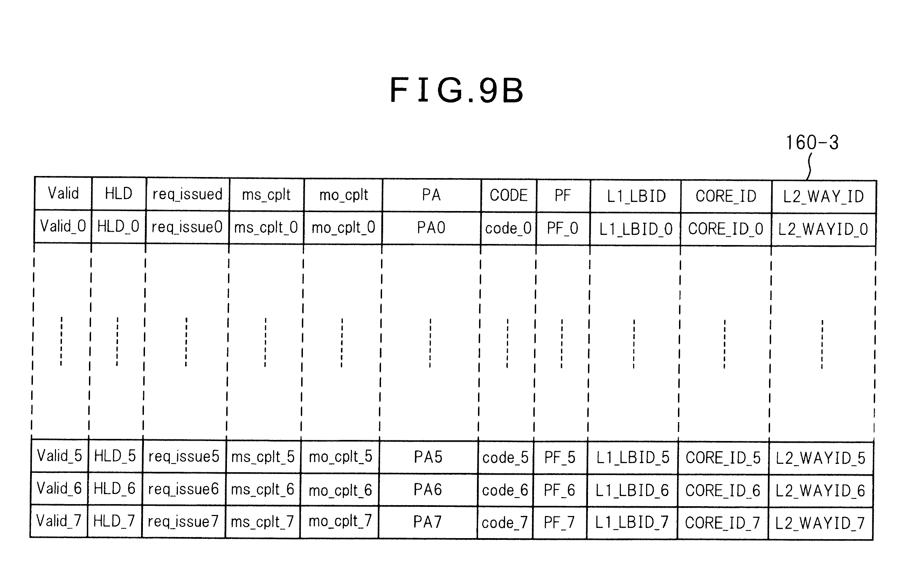

The PF port 66 receives a PF instruction (designated "PREFETCH INSTRUCTION" in the figure) from the processor core 10 and holds it, and outputs the PF instruction on the first pipeline 70 or the second pipeline 80 via the first priority control circuit 61 or the second priority control circuit 62, whichever is selected by the pipeline selector 60. One example of the PF port 66 will be described later with reference to Figs. 9A and 9B.

To prevent the instructions from the processor core 10 from overflowing, the MO port 63, the LD port 64, and the PF port 66 each include a resource counter which adds 1 (+1) to (increments) the current pointer value when an instruction notification is received from the processor core 10, and subtracts 1 (-1) from the current pointer value when a release notification is transmitted to the processor core 10, the resource counter thus limiting the number of issued instructions so as not to exceed the number of entries. The MO port 63, the LD port 64, and the PF port 66 each send a release notification to the L1 cache controller 18 upon completion of the pipeline processing of the instruction output on the first pipeline 70 or the second pipeline 80.

[L2 cache controller: One example of PF port]

Fig. 6 is a diagram illustrating the L2 cache controller 90, in particular, the details of one example of the PF port. The PF port 66 includes an entry selector 66-1, an empty entry selector 66-2, a PF storage circuit 66-3, and a decoder 66-4.

The PF storage circuit 66-3 is a circuit for holding PF instructions, and stores information containing the valid bit (Valid), physical address (PA), code (CODE), first pipe hold (P1HLD), load inhibit (INH), second pipe hold (P2HLD), and second pipe done (P2DONE) fields. The term entry refers to the storage area for storing the above information for each PF instruction.

The valid bit (Valid) is a bit that indicates whether the entry is valid or not; the bit is set to "1" when the corresponding entry in the PF storage circuit 66-3 is valid, and to "0" when the corresponding entry in the PF storage circuit 66-3 is invalid. The second pipe done (P2DONE) is a bit that is set to indicate that the PF instruction specified by the PA has completed its execution through the second pipeline 80; when set to "1", it indicates that the execution of the PF instruction is completed, and when set to "0", it indicates that the execution of the PF instruction is not completed yet.

The valid bit is set from "1" to "0" when pipeline processing through the first pipeline 70 or the second pipeline 80 has been completed without being aborted. When the pipeline processing is performed, if it is found that the target data is not registered in the LB 160, the second pipeline 80 aborts the pipeline processing. In this case, the second pipe done (P2DONE) for the entry not registered in the LB 160 is set to "1", while on the other hand, the valid bit remains at "1". As will be described later, when the second pipe done (P2DONE) set to "1", and the valid bit is "1", the first pipeline 70 processes the PF instruction.

The empty entry selector 66-2 refers to the valid bit held at each entry in the PF storage circuit 66-3 and determines that any entry whose valid bit is "0" is an overwritable entry, i.e., an empty entry, and indicates to the entry selector 66-1 that there is an empty entry. The entry selector 66-1 enters a PF instruction into the empty entry indicated by the empty entry selector 66-2.

The code (CODE) is information that identifies the type of the PF instruction. The code identifies whether the PF instruction is a "shared instruction prefetch instruction", a "shared data prefetch instruction", or an "exclusive data prefetch instruction". A "shared instruction prefetch instruction" is a signal that requests that the prefetched instruction be held in the L2 cache RAM 110 in a "shareable" state ready to be shared with other processors. A "shared data prefetch instruction" is a signal that requests that the prefetched data be held in the L2 cache RAM 110 in a "shareable" state ready to be shared with other processors. An "exclusive data prefetch instruction" is a signal that requests that the prefetched data be held in the L2 cache RAM 110 in an exclusive state, that is, in a state that allows the requesting processor core to alter the data.

The first pipe hold (P1HLD) is set to indicate that the PF instruction is being processed through the first pipeline 70. That is, P1HLD is set to "1" when the PF instruction is being processed through the first pipeline. On the other hand, the second pipe hold (P2HLD) set to "1" when the PF instruction is being processed through the second pipeline 80. When a notification that the first pipeline 70 or the second pipeline 80, whichever is selected by the pipeline selector 60, has processed the PF instruction is received from the corresponding pipeline, the PF port 66 sets the corresponding first pipe hold or second pipe hold to indicate that the PF instruction is in the process of execution.

The load inhibit (INH) is set to indicate that the PF instruction is unable to be output on the first pipeline 70 or the second pipeline 80 because, for example, the LB 160 is rendered unusable.

The decoder 66-4 receives a completion notification or abortion notification specifying the port and entry IDs from the first pipeline 70 or the second pipeline 80. When a completion notification is received from the first pipeline 70 or the second pipeline 80, the decoder 66-4 sets the valid bit to an invalid state for the entry in the PF storage circuit 66-3 specified by the completion notification. On the other hand, when an abortion notification is received from the first pipeline 70 or the second pipeline 80, the decoder 66-4 sets the first pipe hold or second pipe hold to a valid state for the entry in the PF storage circuit 66-3 specified by the abortion notification.

The PF port 66 receives PF instructions from the processor 10, enters each PF instruction into an empty entry in the PF storage circuit 66-3, and loads the PF instructions in the order of request reception into the first pipeline 70 or the second pipeline 80 via the pipeline selector 60. The first pipeline 70 or the second pipeline 80 sends, at the end of the final stage, a completion notification or an abortion notification to the PF port 66. In the case of the processing completion, the PF port 66 releases the entry in the PF storage circuit 66-3 corresponding to the completed processing, while in the case of the abortion, the PF port 66 again outputs the PF instruction on the first pipeline 70 or the second pipeline 80.

[L2 cache controller: First example of pipeline selector]

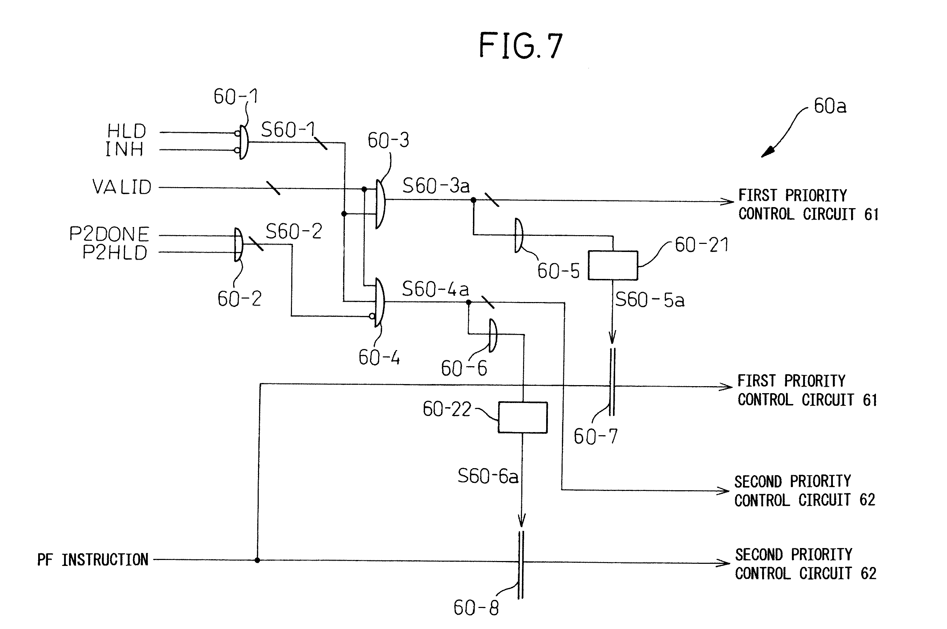

Fig. 7 is a diagram illustrating one example of the pipeline selector. The pipeline selector 60a depicted in Fig. 7 is one example of the pipeline selector 60 depicted in Fig. 6. The pipeline selector 60a includes AND circuits 60-1, 60-3, and 60-4 which perform AND operations, OR circuits 60-2, 60-5, and 60-6 which perform OR operations, selector circuits 60-7 and 60-8, and priority circuits 60-21 and 60-22. As many logic circuits and input/output lines, such as depicted in Fig. 7, are provided as there are PF ports 66. The OR circuits 60-5 and 60-6 each output a signal of a logic high level if the signal on any one of the input/output lines provided as many as the number of PF ports goes high.

The pipeline selector 60a selects the first pipeline 70 or the second pipeline 80 as a pipeline for processing the PF request. The pipeline selector 60a receives the first pipe hold (HLD), load inhibit (INH), and valid bit signal (VALID) from the PF port 66 as input signals. The valid bit signal (VALID) is a bit signal that indicates whether the entry is valid or not for each physical address entry number in the PF port 66, and has a bit value corresponding to the number of entries in the PF port 66. Based on the input signals, if the entry in the PF storage circuit 66-3 is valid, and if the first pipeline is not in the process of processing or the LB 160 is not in the load inhibit state, then the pipeline selector 60a performs processing to load the PF request into the first pipeline or the second pipeline.

Further, the pipeline selector 60a receives the second pipe hold (P2HLD) and second pipe done (P2DONE) from the PF port 66 as input signals and, if one of the input signals is "1", inhibits the loading of the PF instruction into the second pipeline 80. As will be described later with reference to Fig. 9, the second pipeline 80 loads the PF instruction into the LB 160 and performs processing to detect whether or not the PA of any one of the entries held in the LB 160 matches the PA specified by the PF instruction. In this specification, matching the PA of the data requested by the PF request or LD request against the entries held in the LB 160 is referred to as the "PA matching".

If no "PA match" is detected by the second pipeline 80, the process of the present embodiment proceeds to process the PF instruction on the first pipeline 70. Accordingly, when the second pipe done (P2DONE) is "1", indicating "no PA match", the pipeline selector 60a operates so as not to load the PF instruction into the second pipeline 80. The reason is that the second pipeline 80 is the pipeline specifically provided to detect for a "PA match" in the LB 160 and, once no "PA match" is detected, if the "PA matching" is performed once again, it will end up detecting no "PA match".

Further, when P2HLD is "1", i.e., when the second pipeline is in the process of processing, the pipeline selector 60a also operates so as not to load the PF instruction into the second pipeline 80. In this case, since the second pipeline 80 is in the process of processing, the loading of the PF instruction into the second pipeline 80 is inhibited so that the same processing will not be repeated.

When the output signal S60-5a of the OR circuit 60-5 is "1", i.e., when the signal S60-5a indicates the request entry to the first pipeline, the selector circuit 60-7 passes the PF instruction to the first priority control circuit 61. When the output signal S60-6a of the OR circuit 60-6 is "1", i.e., when the signal S60-6a indicates the request entry to the second pipeline, the selector circuit 60-8 passes the PF instruction to the second priority control circuit 62.

The AND circuit 60-1 receives inverted versions of the first pipe hold signal (P1HLD) and load inhibit signal (INH) from the PF port 66 as input signals, and outputs to the AND circuit 60-4 as well as to the AND circuit 60-3 a signal S60-1 whose value is "1" when the input signals are both "1", i.e., when P1HLD and INH are both "0". The OR circuit 60-2 receives the second pipe hold (P2HLD) and the second pipe done (P2DONE) from the PF port 66 as input signals, and outputs to the AND circuit 60-4 a signal S60-2 whose value is "1" when one of the input signals is "1".

The AND circuit 60-3 receives the valid bit signal (VALID) from the PF port 66 and the signal S60-1 as input signals, and outputs a signal S60-3a whose value is "1" when the input signals are both "1". The signal S60-3a is supplied to the first priority control circuit 61 and also supplied as the signal S60-5a to the selector circuit 60-7 via the OR circuit 60-5, which generates a 1-bit "PIPE request signal" from the 8-bit input signal, and via the priority circuit 60-21. The signal S60-3a supplied to the first priority control circuit 61 is used as the select signal in the priority control circuit 61.

When the signal S60-5a whose value is "1" is received, the selector circuit 60-7 selects the first priority control circuit 61 as the circuit into which the PF instruction from the PF port corresponding to the entry number is to be loaded, and loads the PF instruction into the first priority control circuit 61. The priority circuit 60-21 selects the oldest entry number, for example, in accordance with the time at which the entry was registered in the PF port.

The AND circuit 60-4 receives the valid bit signal (VALID) from the PF port 66, the signal S60-1, and an inverted version of the signal S60-2, as input signals, and outputs a signal S60-4a whose value is "1" when all the input signals are "1". The signal S60-4a is supplied to the second priority control circuit 62 and also supplied to the selector circuit 60-8 via the OR circuit 60-6 and via the priority circuit 60-22. When the signal S60-6a whose value is "1" is received, the selector circuit 60-8 selects the second priority control circuit 62 as the circuit into which the PF instruction from the PF port corresponding to the entry number is to be loaded, and loads the PF instruction into the second priority control circuit 62. The priority circuit 60-22 selects the oldest entry number, for example, in accordance with the time at which the entry was registered in the PF port.

The input signals to the AND circuit 60-3 are also input to the AND circuit 60-4. The output signal of the AND circuit 60-3 and the output signal of the AND circuit 60-4 serve to provide the PIPE request signal to the selector circuit 60-7 and the PIPE request signal to the selector circuit 60-8, respectively. With this circuit configuration, when it is requested to load the PF instruction into the second pipeline 80, it is also requested to load the PF instruction into the first pipeline 70. However, in the first pipeline 70, the processing priority of the PF instruction is set lower than that of any other instruction, as earlier noted. As a result, if there is any other instruction to be processed, the PF instruction is not selected by the first priority control circuit 61 and therefore not loaded into the first pipeline 70.

On the other hand, the second pipeline 80, which is dedicated to the processing of PF instructions, processes any PF instruction received from the pipeline selector 60 and performs detection for a PA match. If a PA match is detected by the second pipeline 80, the PF instruction is deleted from the entry in the PF port. In other words, the second pipeline 80 receives a completion signal from the LB 160 and sets the valid bit to "0" for the entry in the LB 160 with which the PF instruction was matched. If a PA match is not detected by the second pipeline 80, the second pipe done (P2DONE) for the PF instruction remains at "1", and the entry for that PF instruction is held as a valid entry in the PF port 66 until the first pipeline 70 completes the processing.

With this operation, when the first pipeline 70 is in a "busy" state, the PF instruction is held off from being loaded into the first priority control circuit 61, while on the other hand, the second pipeline 80 which is dedicated to the PF instruction processes the PF instruction while maintaining a given throughput. Accordingly, any request for which an address match is found in the LB 160 is processed by the second pipeline 80, and only a request unable to be completed unless a tag search is conducted in the L2 tag RAM 140 is processed by the first pipeline 70.

In this way, the PF instruction that specifies the target physical address is preferentially supplied to the second priority control circuit 62, and detection for a PA match is performed by the second pipeline 80. If a PA match is not detected by the second pipeline 80, the PF instruction is processed by the first pipeline 70. With such processing, the processing apparatus 100 can reduce the PF instruction processing load of the first pipeline 70.

[L2 cache controller: Second example of pipeline selector]

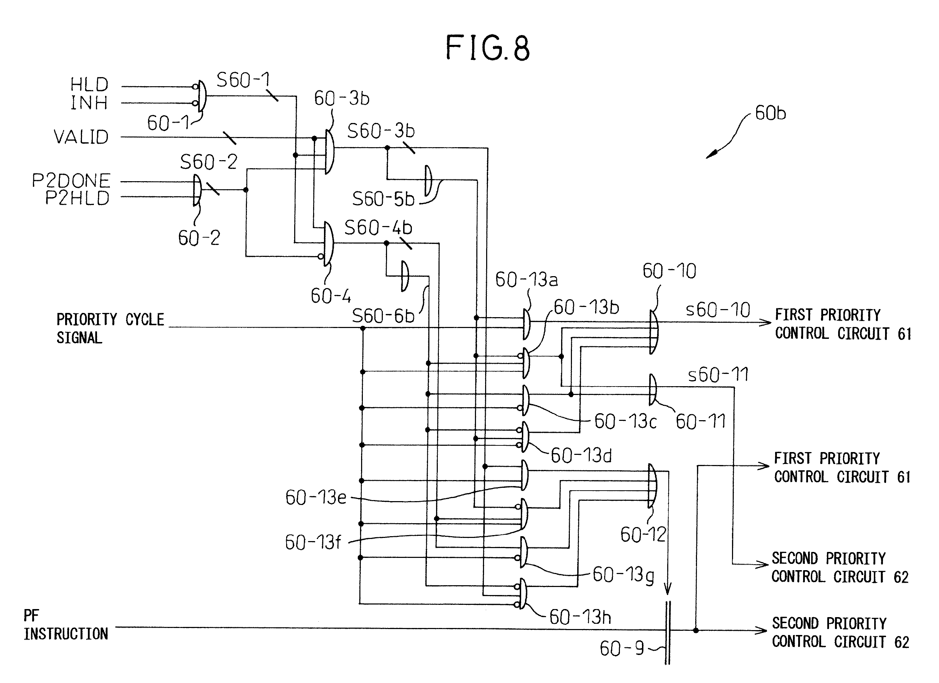

Fig. 8 is a diagram illustrating another example of the pipeline selector. The pipeline selector 60b depicted in Fig. 8 is one example of the pipeline selector 60 depicted in Fig. 6, but is different from the pipeline selector 60a depicted in Fig. 7.

In the pipeline selector 60b, the two selector circuit 60-7 and 60-8 in the pipeline selector 60a are replaced by one selector circuit 60-9. This has the effect of reducing the number of input lines to the selector circuitry by eliminating one PF instruction selector circuit.

The pipeline selector 60b depicted in Fig. 8 includes an AND circuit 60-3b to replace the AND circuit 60-3 in the pipeline selector 60a depicted in Fig. 7, and additionally includes OR circuits 60-10 to 60-12 and AND circuits 60-13a to 60-13h. The component elements designated by the same reference numerals as those in Fig. 7 have already been described with reference to Fig. 7 and therefore will not be further described herein.

The AND circuit 60-3b differs from the AND circuit 60-3 depicted in Fig. 7 in that the output signal S60-2 of the OR circuit 60-2 is also supplied as an input signal to the AND circuit 60-3a, so that an output "1" can be produced when either the second pipe done or the second pipe hold is "1". In the circuit of Fig. 8, as in the circuit of Fig. 7, when either the second pipe done or the second pipe hold is "1", the PF instruction is not supplied to the second pipeline 80. Therefore, the output signal S60-3b is a signal that indicates that the PF instruction is to be supplied only to the first pipeline 70. Further, the signal S60-5b is a signal that indicates that there exists a PF instruction to be supplied only to the first pipeline 70. On the other hand, the signal S60-4b is a signal that indicates that there exists a PF instruction to be supplied to both the first pipeline 70 and the second pipeline 80, and the signal S60-6b is a signal that indicates that there exists a PF request to both the first pipeline 70 and the second pipeline 80.

The pipeline selector 60b uses a "priority cycle signal" so that the PF instruction can be supplied to the first pipeline 70 or the second pipeline 80 by selecting one or the other with only one selector circuit. The priority cycle signal is used to cyclically change the priority order between the first pipeline and the second pipeline. When the priority cycle signal is ON, a second pipe processing/processed flag request is preferentially selected, and if there is no second pipe processing/processed flag request, a request is selected from among other requests. The opposite is case when the priority cycle signal is OFF. The priority cycle signal is a signal whose output alternates cyclically between "1" and "0" in synchronism with a clock. The priority cycle signal is supplied to the AND circuits 60-13a to 60-13h. Since the AND circuits 60-13a, 60-13b, 60-13e, and 60-13f receive the priority cycle signal at their noninverting input terminals, the AND circuits 60-13a, 60-13b, 60-13e, and 60-13f each can output "1" when the priority cycle signal is "1". On the other hand, since the AND circuits 60-13c, 60-13d, 60-13g, and 60-13h receive the priority cycle signal at their inverting input terminals, the AND circuits 60-13c, 60-13d, 60-13g, and 60-13fh each can output "1" when the priority cycle signal is "0".

If the processing apparatus is equipped with a plurality of processor cores and a plurality of prefetch ports directly connected to the respective cores, and is configured so that the requests from the respective prefetch ports are selected by a priority control unit and loaded into the first and second pipelines, the phase of the priority cycle signal supplied to each prefetch port is alternately reversed.

By thus reversing the phase alternately, requests can always be delivered evenly from the respective prefetch ports to the first and second pipelines such that, while a request to the second pipe is output from a given core, a request processed through the second pipe is requested to the second pipe from another core.

The valid bit signal (VALID) is supplied to the AND circuits 60-3b and 60-4. The valid bit signal (VALID) is a bit signal that indicates whether the entry is valid or not for each physical address entry number in the PF port 66, and has a bit value corresponding to the number of entries in the PF port 66. The AND circuits 60-3b and 60-4 each receive from the outputs of the AND circuits 60-1 and 60-2 an attribute value that differs for each entry. As a result, when the priority cycle signal is "1", the entry for which the signal S60-3b is "1" is preferentially processed by the AND circuits 60-13a and 60-13b, not by the AND circuits 60-13c and 60-13d. On the other hand, when the priority cycle signal is "0", the entry for which the signals S60-3b and S60-4b are both "0" is preferentially processed by the AND circuits 60-13c and 60-13d. By thus causing the priority cycle signal to alternate between "0" and "1", each PF instruction held in the PF port 66 is processed in a selective manner in accordance with the priority cycle signal.

The AND circuit 60-13a outputs a signal whose value is "1" when the priority cycle signal and the output of the AND circuit 60-3b are both "1". The output S60-13a is supplied to the OR circuit 60-10.

When the priority cycle signal and the output S60-4b of the AND circuit 60-4 are both "1", and when the output S60-3b of the AND circuit 60-3b is "0", the AND circuit 60-13b outputs a signal "1" to the OR circuit 60-11. The output signal of the AND circuit 60-13b is supplied to the OR circuit 60-10 as well as to the OR circuit 60-11.

When the priority cycle signal is "0", and when the output of the AND circuit 60-4 is "1", the AND circuit 60-13c outputs a signal "1" to the OR circuits 60-10 and 60-11. The output signal of the OR circuit 60-11 serves as a PF instruction output to the second pipeline 80. On the other hand, since the output of the AND circuit 60-13c is supplied not only to the OR circuit 60-11 but also to the OR circuit 60-10, the PF instruction is supplied to the first pipeline 70 even when the second pipe is not completed or the second pipe is not aborted, as with the pipeline selector 60a depicted in Fig. 7.

When the priority cycle signal and the output of the AND circuit 60-4 are both "0", and when the output of the AND circuit 60-3b is "1", the AND circuit 60-13d outputs a signal "1" to the OR circuit 60-12.

When the priority cycle signal and the signal S60-3b are both "1", the AND circuit 60-13e outputs a signal "1" to the OR circuit 60-12.

When the priority cycle signal is "1", and when the signal S60-5b is "0", the AND circuit 60-13f outputs a signal "1" to the OR circuit 60-12.

When the priority cycle signal is "0", and when the signal S60-4 is "1", the AND circuit 60-13g outputs a signal "1" to the OR circuit 60-12.

When the priority cycle signal and the signal S60-6b are both "1", and when the signal S60-3b is "1", the AND circuit 60-13h outputs a signal "1" to the OR circuit 60-12.

The OR circuit 60-10 outputs a signal S60-10 for selecting the PF instruction held at an entry determined by the value of the priority cycle signal, and supplies the output signal to the first pipeline 70 via the first priority control circuit 61. On the other hand, the OR circuit 60-11 outputs a signal S60-11 for selecting a PF instruction from among the PF instructions held at the entries determined by the priority cycle signal but excluding those with the second pipe done or the second pipe hold, and supplies the output signal to the second pipeline 80 via the second priority control circuit 62.

The OR circuit 60-12 outputs a signal indicating the destination of the PF instruction to the selector circuit 60-9 in synchronism with the outputs of the control signals S60-10 and S60-11. The selector circuit 60-9 passes the PF instruction to the first priority control circuit 61 or the second priority control circuit 62, depending on the value of the supplied signal.

[L2 cache controller: Instructions from processor core]

The LD instruction is an instruction for loading data into the execution unit 14, and the store instruction is an instruction for storing data in the main storage unit 220. The PF instruction is an instruction for loading data from the main storage unit 220 into the L2 cache RAM 110.

The L1 replace instruction is an instruction for replacing data from the L1 cache RAM 16 or for invalidating data held in the L1 cache RAM 16 by an instruction issued from the L2 cache controller 90. With the L1 replace instruction, processing is performed such as updating the L2 cache RAM 110 to reflect the data updated in the L1 cache RAM 16, updating the L2 tag RAM 140 due to invalidation of the L1 cache RAM 16, etc.

The L2 replace instruction is an instruction for replacing data from a cache line in order to store the data loaded from the main storage unit 220 when a cache miss has occurred in the L2 cache RAM 110 during the execution of the PF instruction or LD instruction.

The MC replace instruction is an instruction for writing the data loaded from the MC 200 and held in the data input buffer 32 to the L2 cache RAM 110 or transferring the data to the processor core 10 when the L2 replace instruction is completed and a data response is output from the MC 200. When the data from the MC 200 is one acquired by the PF instruction, the L2 tag RAM 140 is updated, and the data is written to the L2 data RAM 120. When the data from the MC 200 is one acquired by the LD instruction, the data is transferred to the processor core 10, and the L1 replace instruction is issued.

[Priority control circuits]

The first priority control circuit 61 receives the MO instruction, LD instruction, and LD instruction from the MO port 64, LD port 64, and PF port 66, respectively, via the first pipeline selector 60, and loads the instructions into the first pipeline 70 in predetermined priority order. The first priority control circuit 61 loads the instructions into the first pipeline 70, for example, in the order of the L1 replace instruction, the MC replace instruction, the L2 replace instruction, the LD instruction, and the PF instruction. Accordingly, the L1 replace instruction has the highest priority, and the PF instruction the lowest priority.

Provisions are also made so that the L1 replace instruction, LD instruction, and PF instruction are evenly selected between the cores. Since the MO port and the LD port are provided for each core, the MO or LD instructions from other cores are also input to the first priority control circuit 61.

Since the PF port is provided for each core, the PF instructions from other cores are also input to the pipeline selector 60. The second priority control circuit 62 loads the PF instruction output from the pipeline selector 60 into the second pipeline 80.

The first priority control circuit 61 may first identify loadable entries by the type of instruction and then output the instruction onto the pipeline by selecting, from among the loadable entries, the entry holding the request least recently received from the core.

[First pipeline]

The first pipeline 70 controls data access to the L2 cache RAM 110 and manages various kinds of resources. The first pipeline 70 determines whether a cache miss or a cache hit has occurred in the L2 cache RAM 110, for example, during the execution of the LD instruction or PF instruction. The first pipeline 70 further determines whether or not there is a match between the dada entry held in the LB 160 and carried in the LD instruction to the main storage unit 220 and the cache line specified by the LD or PF instruction. The load instruction to the main storage unit 220 will hereinafter be referred to as the "MLD instruction".

If a cache miss occurs in the L2 cache RAM 110, the first pipeline 70 transfers the LD instruction received from the LD port 64 or the PF instruction received from the PF instruction 66 into the LB 160. In response, the first pipeline 70 receives a PA match/mismatch signal from the LB 160.

Further, the first pipeline 70 performs operations to read/write information (designated "R/W" in the figure) from/to the L2 data RAM 120 and L2 tag RAM 140.

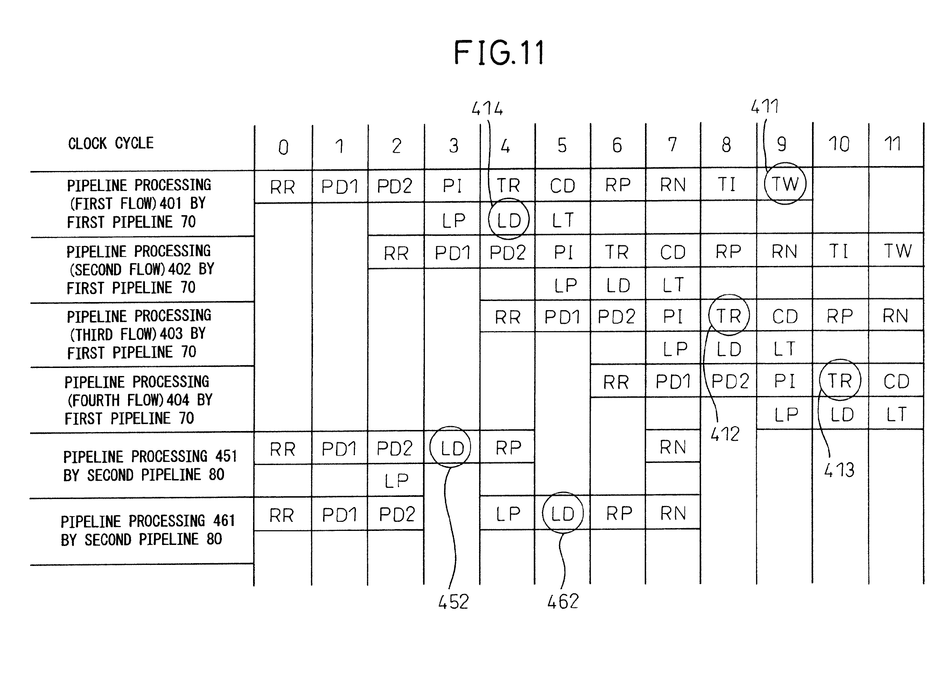

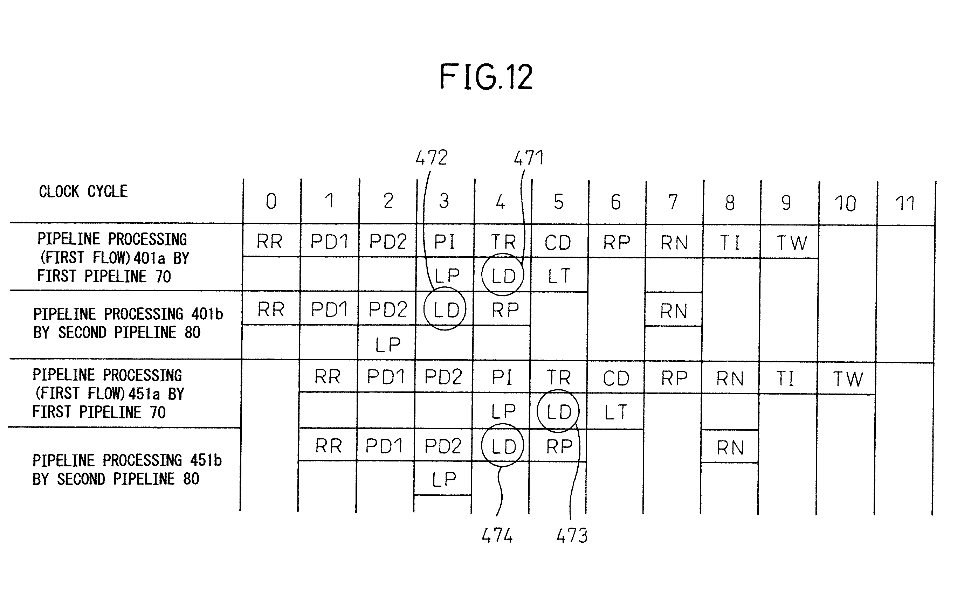

The first pipeline 70 supplies a completion signal indicating the completion of the pipeline processing, or an abortion signal indicating the abortion of the processing, to the MO port 63, the LD port 64, and the PF port 66. One example of the processing of the first pipeline will be described later with reference to Figs. 11 and 12.

Fig. 1 also depicts the hit buffer 170. When a cache hit occurs, the first pipeline 70 registers the hit address in the hit buffer 170.

[Second pipeline]

The second pipeline 80 is a pipeline for detecting whether the physical address specified by the PF instruction matches the physical address of the data held in the LB 160 and carried in the MLD instruction. While the first pipeline 70 is responsible for the entire data access control to the L2 cache RAM 110, the processing of the second pipeline 80 is limited to the prefetch processing. One reason for thus limiting the processing of the second pipeline 80 is that the PF instructions are successively processed for the same physical address.

The second pipeline 80 determines, based on the PA match/mismatch signal from the LB 160, whether the PA specified by the PF instruction matches the PA of any one of the entries held in the LB 160. The result of the PA match/mismatch detection is supplied to the MO port 63, the LD port 64, and the PF port 66. In the example of Fig. 1, a signal produced by ORing the output from the LB 160 with the output from the hit buffer (HB) 170 is supplied to the second pipeline 80.

[Load buffer]

Figs. 9A and 9B are diagrams illustrating one example of the load buffer.

The LB 160 is a storage unit for holding data to be stored in the L2 cache RAM 110.

The LB 160 includes an entry selector 160-1, an empty entry selector 160-2, a storage area 160-3, decoders 160-4 and 160-13, a PA comparator 160-5, an AND circuit 160-6, and an OR circuit 160-7. The LB 160 further includes an LB entry monitor 160-10 and selector circuits 160-11 and 160-12.

The storage area 160-3 is organized into entries each for holding a valid bit (Valid), physical address (PA), code (CODE), PF number, L1 identifying information (L1LID), hold (HOLD), and core ID (CORE_ID). The storage area 160-3 is also organized into entries for holding L2 way identifying information (L2WAYID), main controller instruction issued flag (Req_issued), memory controller response received (MS_cplt), and L2 replace instruction completed (MO_cplt).

Physical address (PA) and code (CODE) are generated in the processor core 10, are delivered as part of the LD instruction or PF instruction to the LB 160 via the LD port 64 or the PF port 66, and are registered by the first entry acquisition in the LB 160.

L1 identifying information or core ID is generated in the processor core 10, and is registered via the LD port 64 by the first entry acquisition in the LB 160. L2 way ID is generated in the L2 tag RAM 140, and is registered by the first entry acquisition in the LB 160.

If a cache miss is detected on the PF instruction or LD instruction, and if a PA mismatch has occurred in the LB 160, the first pipeline 70 acquires an entry from the LB 160 at the completion of the pipeline processing and, at the same time, issues an MLD instruction to the MC 200 via the LB 160.

As an example, the entry acquired from the LB 160 is the least recently acquired entry selected from among the entries whose valid bit (Valid) is "0" in the storage area 160-3. The selected entry contains information, such as PA, CODE, REQ_ID, PF, and L2 way ID (L2WAYID), along with an entry acquire instruction from the first pipeline 70.

Further, each time new processing is performed in the first pipeline 70, the LB 160 detects a PA match or mismatch by comparing each valid entry in the storage area 160-3 with the PA sent out from the first pipeline 70 or the second pipeline 80, and returns the result to the first pipeline 70 or the second pipeline 80.

The empty entry selector 160-2 searches for an entry whose valid bit (Valid) is invalidated, and reports it to the entry selector 161.

When the LD instruction or PF instruction is received, the LB 160 registers the LD instruction or PF instruction into the empty entry reported from the empty entry selector 160-2. From the registered entry, a request is made to the first pipeline to load the L2 replace instruction or MC replace instruction in accordance with a prescribed condition. The decoder 160-4 receives from the first pipeline 70 a completion notification or abortion notification specifying the entry ID. When the completion notification of the MC replace instruction is received from the first pipeline 70, the decoder 160-4 invalidates the valid bit in the entry specified by the completion notification.

When the abortion notification is received from the first pipeline 70, the decoder 160-4 invalidates the hold in the entry specified by the abortion notification. The decoder 160-13 receives a memory response signal indicating that the data has been read out from the MC 200, and sets the memory controller response received (MS_cplt) to "1" in the entry specified by the memory response signal.

The PA comparator 160-5 compares the PA of the data requested by the LD instruction or PF instruction being processed through the first pipeline 70 with the PA of the data held in the LB 160, and thereby determines whether the data match or not. Further, the PA comparator 160-5 compares the PA of the data requested by the PF instruction being processed through the second pipeline 80 with the PA of the data held in the LB 160, and thereby determines whether the data match or not. While only one PA comparator 160-5 is depicted in Fig. 9A, it will be noted that one PA comparator 160-5 is provided for each entry in the storage area 160-3.

Likewise, as many AND circuits 160-6 are provided as there are entries in the storage area 160-3. Each AND circuit 160-6 outputs a "1" to the OR circuit 160-7 when the valid bit in the corresponding entry and the signal received from the PA comparator 160-5 are both "1".

The OR circuit 160-7 receives the output signals of the plurality of AND circuits 160-6 as input signals and, if any one of the input signals is "1", the OR circuit 160-7 produces an output signal which is supplied as a "PA match notification" to the first pipeline 70 or the second pipeline 80.

When the LD instruction or PF instruction is received from the first pipeline 70, the LB 160 registers the LD instruction or PF instruction into an empty entry in the storage area 160-3. The LB 160 retrieves instructions from the storage area 160-3 in the order in which they were received, and sends the MLD instruction to the MC 200. The first pipeline 70 sends the completion/abortion notification to the LD port 64 or PF port 66, and thus releases the corresponding entry in the storage area 160-3 via the LD port 64 or PF port 66.

The LB entry monitor 160-10 refers to the storage area 160-3 and, if the valid bit (Valid) in a given entry in the storage area 160-3 is "1", and if the main controller instruction issued flag (Req_issued) is "0", the LB entry monitor 160-10 outputs to the selector circuit 160-11 a signal 160-10a for issuing an instruction corresponding to that entry to the MC 200.

When the select signal 160-10a is received from the LB entry monitor 160-10, the selector circuit 160-11 outputs to the first priority control circuit 61 a replace instruction for replacing the entry that satisfied the condition for generating the select signal 160-10a.

On the other hand, if the valid bit (Valid), memory request issued (Req_issued), L2 replace instruction completed (MO_CPLT), and memory controller response received (MS_ cplt) in the entry in the storage area 160-3 are all "1", and if the hold (hld flg) is "0", the LB entry monitor 160-10 outputs a signal S160-10b to the selector circuit 160-12. When the signal 160-10b is received from the LB entry monitor 160-10, the selector circuit 160-12 outputs an MC replace instruction to the first priority control circuit 61.

In Fig. 9A, only one load buffer is depicted, but when the L2 cache RAM is of the type divided into banks, as illustrated in Fig. 5, one load buffer is provided for each bank, i.e., each of the L2 cache RAMs 110a and 110b. By thus dividing the L2 cache RAM into different banks and providing one load buffer for each bank, it is possible for the different banks to perform access to the L2 tag RAM or PA match detection in the LB in the same clock cycle.

[Hit buffer]

The hit buffer (HB) 170 is a storage circuit for holding the requested address, etc., of a PF instruction when a cache hit is detected on the PF instruction by the first pipeline 70. The second pipeline 80 performs processing to determine whether the PA of any one of the entries held in the LB 160 matches the prefetch request entry, but when the requested data has been loaded from the main storage unit 22, the corresponding entry is deleted from the LB 160. As a result, after the processing by the second pipeline 80 is completed, access to the L2 cache RAM 110 occurs in the first pipeline by the PF instruction whose requested data has been loaded from the main storage unit 220. In view of this, in order that the processing of the PF instruction can be completed in the second pipeline 80, the PF instruction on which a cache hit is detected by the first pipeline 70 is held in the hit buffer 170 so that the second pipeline 80 can detect whether the PAs match or not; this serves to reduce the PF instruction processing load of the first pipeline 70.

The hit buffer 170 may be implemented as a dedicated storage circuit provided separately from the LB 160, or the load buffer 160 may be configured to include the function of the hit buffer.

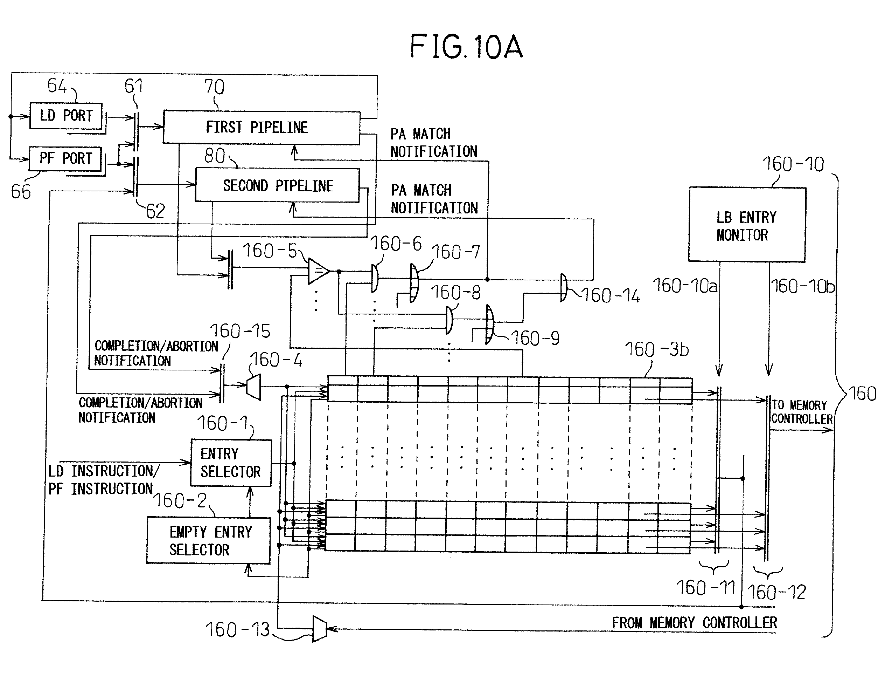

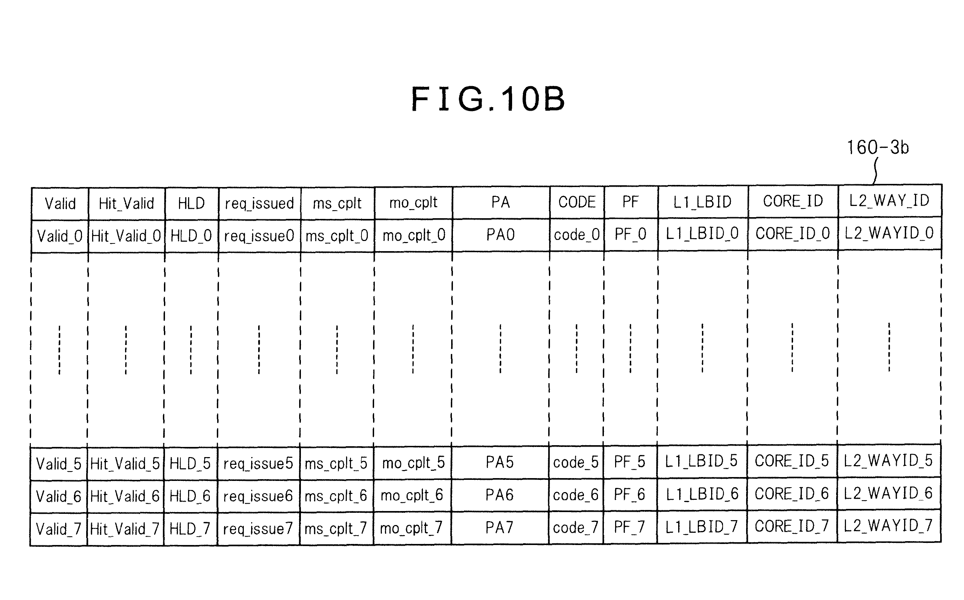

Figs. 10A and 10B are diagrams illustrating one example of the load buffer incorporating the function of the hit buffer. The load buffer 160-3b depicted in Figs. 10A and 10B includes a storage area for storing a hit valid (Hit_Valid) between the area for storing the valid bit (Valid) and the area for storing the hold (HLD). The hit valid is a flag that indicates whether or not the corresponding entry in the load buffer 160-3b is used as a hit buffer. When the hit valid is "1", the corresponding entry is used as a hit buffer. The hit valid takes on a bit value complementary to the value of the valid bit (Valid). That is, when the first or second pipeline has loaded the data from the main storage unit 220 by the entry in the LB 160, and the valid bit (Valid) changes to "0", the hit valid (Hit_Valid) changes to "1". Since the empty entry selector 162 regards any entry whose valid bit (Valid) is "0" as being an "empty entry" and reports such an entry to the entry selector 161, the entry whose valid bit (Valid) is "0" is usually overwritten with a new entry. Accordingly, any such entry in the load buffer 160-3b can be used as the hit buffer 170 until it is overwritten with a new entry. The hit buffer storage area does not occupy a large storage area in the load buffer 160-3b. If such a storage area in the load buffer 160-3b is used as the hit buffer 170, the entire storage area of the load buffer 160-3b does not increase unreasonably.

If a cache miss is detected by the first pipeline 70 during the processing of the PF instruction or LD instruction, an entry whose valid bit is "0" is acquired by the entry selector 160-1 from among the entries in the load buffer 160-3b upon completing the processing of the first pipeline 70. In this case, if an entry whose hit valid is also "0" is preferentially selected, the hit valid data can be held in the load buffer 160-3b for a longer time, allowing the second pipeline 80 to process the PF instruction based on the hit valid; this serves to reduce the PF instruction processing load of the first pipeline 70.

If there is no entry whose valid bit and hit valid are both "0", the empty entry selector 162 selects a new entry from among the entries whose valid bit is "0" and whose hit valid is "I".

If a cache hit is detected by the first pipeline 70 during the processing of the PF instruction or LD instruction, an entry whose valid bit and hit valid are both "0" is selected upon completing the pipeline processing, and the cache hit data is registered in the selected entry. Information, such as PA, CODE, REQ_ID, PF, and L2_way_ID, is transferred from the first pipeline 70 and stored in the selected entry, and the valid bit and hit valid are both set to "1".

When incorporating the hit buffer function in the load buffer, AND circuits 160-8 and OR circuits 160-9 and 160-14 are added in the example of Fig. 10 to the peripheral circuitry of the load buffer 160 depicted in Fig. 9A. There are as many AND circuits 160-8 as there are entries in the storage area 160-3. Each AND circuit 160-8 receives the output signal of the PA comparator 160-5 and the hit valid as input signals, and outputs to the OR circuit 160-9 a signal whose value is "1" when the input signals are both "1". The OR circuit 160-9 receives the output signals of the AND circuits 160-8 as input signals, and outputs to the OR circuit 160-14 a signal whose value is "1" when any one of the output bit values of the AND circuits 160-8 is "1". The OR circuit 160-14 receives the output signals of the OR circuits 160-7 and 160-9 and, if either one of the signals is "1", outputs a signal whose value is "1" as a "PA match notification" to the second pipeline 80.

The "PA match notification" to the second pipeline 80 thus includes a PA match with the PF instruction stored in the load buffer and a PA match with the PA stored in the entry used as the hit buffer. Since the PA match notification, whether it indicates a match in the hit buffer or a match in the load buffer, is used in the second pipeline 80 to complete the processing of the PF instruction, the output signals of the OR circuits 160-7 and 160-9 are ORed together by the OR circuit 160-14.

For each flow of the first pipeline 70, the LB 160 detects whether the PA sent out from the first pipeline 70 or the second pipeline 80 matches the PA stored in any one of the valid entries in the load buffer 160-3b, and returns the result to the first pipeline 70 or the second pipeline 80. However, in the first pipeline 70, since a tag search is always performed, a cache hit decision based on the hit valid need not be made, and only the result of the PA matching performed against the valid entries in the LB 160 need be returned to the first pipeline 70. On the other hand, the result of ORing between the result of the PA matching performed against the valid entries in the LB 160 and the result of the PA matching performed against the valid hit buffer entries is returned to the second pipeline 80.

By thus detecting a PA match in the HB, the second pipeline 80 can complete the processing of the PF instruction not only by detecting a match in the LB but by detecting a cache hit. Upon receipt of a data response from the MC 200, the LB 160 outputs a replace instruction to the first pipeline 70 and, upon completion of the output, sets the valid bit in the corresponding entry to "0" to release the entry.

[First pipeline control]

Fig. 11 is a diagram illustrating one example of the processing performed by the first and second pipelines. The first pipeline 70 includes the following stages: request read (RR), priority order decision (PD1, PD2), read target PA input (PI), tag read (TR), cache hit detection (CD), processing result notification (RN), and request processing decision (RP). The first pipeline 70 further includes the following stages: tag updating PA input (TI), tag updating operation (TW), PA transfer (LP), PA match detection (LD), and PA match result transfer (LT).

In the request read (RR) stage, the first pipeline 70 reads a request held in the LD port 64 or the PF port 66 or in the MO port 63 or the LB 160.

In the priority order decision (PD1, PD2) stage, the request read from the LD port 64, PF port 66, MO port 63, or LB 160 is supplied to the first priority control circuit 61, and the first pipeline 70 receives the request output from the first priority control circuit 61 in accordance with a predetermined priority order.

In the read target PA input (PI) stage, the first pipeline 70 inputs the physical address of the access target data to the L2 tag RAM 140. In the PA input stage, the first pipeline 70 also performs the PA transfer (LP) to the LB 160.

In the tag read (TR) stage, the first pipeline 70 reads a tag from the L2 tag RAM 140. In the tag read stage, the first pipeline 70 also performs the PA match detection (LD) in the LB 160.

In the cache hit detection (CD) stage, the first pipeline 70 detects a cache miss or a cache hit in the L2 cache RAM 110. In the cache hit detection stage, the first pipeline 70 also performs the PA match result transfer (LT) in the LB 160.

In the request processing decision (RP) stage, processing is performed in accordance with the result of the detection from the cache hit detection stage. In the case of a cache miss, the first pipeline 70 loads the LD instruction into the entry in the LB 160, and sends a completion notification to the LD port 64 in the processing result notification (RN) stage. In the case of a PF instruction, the completion notification is sent to the PF port 66.

If a cache hit is detected on the LD instruction, the first pipeline 70 reads the data from the L2 data RAM 120, and sends a completion notification to the LD port 64 in the processing result notification (RN) stage. After loading the LD instruction into the LB 160, the first pipeline 70 receives a "PA match notification" from the LB 160, and sends an abortion notification to the LD port 64.

When the completion notification of the MC replace instruction is received, the LB 160 releases the entry specified by the completion notification. If the LD instruction has not been processed, the first pipeline 70 sends an abortion notification to the LB 160 in the processing result notification stage.

If a cache hit is detected on the PF instruction, the first pipeline 70 sends a completion notification to the PF port 66 in the processing result notification stage. After loading the PF instruction into the LB 160, the first pipeline 70 receives a "PA match notification" from the LB 160 and, if there is no difference between the requests held in the LB 160, the first pipeline 70 sends a completion notification to the PF port 66.

In the tag updating PA input stage, the first pipeline 70 receives a PA for updating tag data by the data output from the main storage unit 220 or from the L1 cache RAM 16. In the tag updating operation stage, the first pipeline 70 updates the tag data in the L2 tag RAM 140 by using the received PA. That is, in the tag updating operation stage, write operations are performed to the L2 data RAM 120 and the L2 tag RAM 140.

Reference numeral 401 indicates the first flow of pipeline processing performed by the first pipeline 70. Reference numeral 402 indicates the second flow of pipeline processing the execution of which begins two cycles after the first flow is started. Reference numeral 403 indicates the third flow of pipeline processing the execution of which begins two cycles after the second flow is started. Reference numeral 404 indicates the fourth flow of pipeline processing the execution of which begins two cycles after the third flow is started.

As indicated by the pipeline processing flows 401 to 404, after the first flow is started, each subsequent flow proceeds through the first pipeline 70 with a delay of two cycles from its preceding flow. To execute each subsequent flow with a delay of two cycles, an idle cycle where no pipeline processing is performed is provided, for example, every other cycle.

Reference numeral 411 indicates the tag write operation performed in cycle "9" in the pipeline processing flow 401. Reference numeral 412 indicates the tag read operation performed in cycle "8" in the pipeline processing flow 403. Reference numeral 413 indicates the tag read operation performed in cycle "10" in the pipeline processing flow 404. As illustrated in Fig. 11, the tag write operation 411 in cycle "9", the tag read operation 412 in cycle "8", and the tag read operation 413 in cycle "10" do not occur in the same clock cycle. In this way, by executing each subsequent flow with a delay of two cycles from its preceding flow, the tag read operation performed in an even-numbered clock cycle in each flow can be executed in a different clock cycle than the tag write operation which is performed in an odd-numbered clock cycle in each flow.

The L2 cache RAM 110 depicted in Fig. 4 is a 1-port RAM having a single common port for both reading and writing, and the write amplifiers 123a to 123d and 143a to 143d share the same column lines with the sense amplifiers 124a to 124d and 144a to 144d, respectively, so that it is not possible to perform both write and read operations to any memory cell in the same clock cycle. If both read and write operations are to be performed in the same clock cycle, each cell has to be provided with a read column line and a write column line. An L2 cache RAM capable of reading and writing in the same clock cycle would be complex and costly to achieve. When provisions are made for the first pipeline 70 to execute each subsequent flow with a delay of two cycles from its preceding flow, as described above, the L2 cache RAM can be implemented using a 1-port RAM having a single common port for both reading and writing, because the read and write operations are not performed in the same clock cycle.

[Second pipeline control]

The second pipeline 80 carries out the request read stage, priority order decision stage, PA match detection stage, PA transfer-to-LB stage, request processing decision stage, and processing result notification stage described above. Reference numerals 451 and 452 in Fig. 11 each indicate one example of the pipeline processing. The pipeline processing 451 illustrates an example in which the PA match detection is performed in the stage preceding the PA match detection in the first pipeline processing 401. On the other hand, the pipeline processing 461 illustrates an example in which the PA match detection is performed in the stage following the PA match detection in the pipeline processing 401. In the PA match detection, the second pipeline 80 may detect a PA match between the hit buffer and the PF instruction target data, as earlier described with reference to Figs. 10A and 10B, instead of or in addition to detecting a PA match in the LB 160.

Reference numeral 414 indicates the PA match detection operation performed in cycle "4" in the pipeline processing flow 401, and 452 indicates the PA match detection operation performed in cycle "3" in the pipeline processing flow 451. Reference numeral 462 indicates the PA match detection operation performed in cycle "5" in the pipeline processing flow 461.

The second pipeline 80 performs the PA match detection operation 452, 462 to detect a PA match in the LB 160 in a different clock cycle than the PA match detection operation 414 in the first pipeline 70. As a result, while the first pipeline 70 and the second pipeline 80 share the same address match detection circuit for the PA match detection, there is no ill effect whatsoever on the operation of the first pipeline 70, such as causing the operation to stop.

Since the second pipeline determines the processing based on the detection result of the PA matching with the LB, the number of processing cycles can be reduced compared with the pipeline processing performed by the first pipeline. However, in the case where one PF instruction is issued from the PF port simultaneously to the first and second pipelines and loaded into both the pipelines for processing, the number of pipeline processing cycles in the second pipeline is preferably made equal to the number of pipeline processing cycles in the first pipeline for the following reason.

When the number of processing cycles is made the same for both the first pipeline processing and the second pipeline processing, the PF port can receive the completion notification or abortion notification for the PF instruction from the two pipelines at the same time. In this case, if priority logic is set to give priority to the completion notification received from the first pipeline so that the PF port completes the processing and releases the corresponding entry in the storage area 66-3 in accordance with the completion notification received from the first pipeline while ignoring the completion notification received from the second pipeline, the number of completion notifications that the PF port receives can be limited to one, and only one receive port need be provided for receiving the completion notification. However, if the number of processing stages in the first pipeline does not match the number of processing stages in the second pipeline, completion notifications for different kinds of requests may arrive simultaneously at the PF port. In this case, two receive ports need to be provided so that the completion notifications from both the pipelines can be received.

As illustrated in Fig. 11, the processing result notification is performed in cycle "7" in both the first pipeline and the second pipeline; therefore, the cycles "5" and "6" in the pipeline processing flow 451 and the cycle "3" in the pipeline processing flow 461 are reserved as idle cycles. Since both the pipelines perform the processing result notification in the same clock cycle, the PF port 66 receives the completion notification or abortion notification for the PF instruction from the first and second pipelines 70 and 80 at the same time. In the PF port 66, by giving priority to the completion notification received from the first pipeline 70 and by selecting only one completion notification using the selector circuit 160-15, only one decoder 160-4 can be provided to receive the completion notification.

[Pipeline processing for RAM divided into banks]

Fig. 12 is a diagram illustrating one example of the processing performed by the first and second pipelines for the case of the L2 cache RAM divided into banks. As depicted in the program A, read and write operations cannot be performed to the L2 cache RAM 110a or the L2 cache RAM 110b in the same clock cycle. However, a read or write operation can be performed to the L2 cache RAM 110b in the same clock cycle during which a read or write operation is performed to the L2 cache RAM 110a. This is because the L2 cache RAM 110a and the L2 cache RAM 110b have memory cells of their own. Further, in pipeline processing, it is also possible to execute two pipeline processes in the same clock cycle. For example, the PA match detection can be executed in the same clock cycle in different pipeline processes.

Reference numeral 401a indicates the pipeline processing of the first pipeline 70 for the L2 cache RAM 110a, and 451a indicates the pipeline processing of the first pipeline 70 for the L2 cache RAM 110b. Further, 401b indicates the pipeline processing of the second pipeline 80 for the L2 cache RAM 110a, and 451b indicates the pipeline processing of the second pipeline 80 for the L2 cache RAM 110b. The pipeline processing 451a that follows the pipeline processing 401a is delayed by one cycle. Likewise, the pipeline processing 401b that follows the pipeline processing 451a is delayed by one cycle. In this way, each subsequent flow can be executed with a delay of one cycle, because the L2 cache RAM is divided into banks so that read and write operations do not occur to the same cache RAM simultaneously in the same clock cycle.

Reference numeral 471 indicates the PA match detection operation performed in cycle "4" in the first pipeline 70, and 472 indicates the PA match detection operation performed in cycle "3" in the second pipeline 80. Further, 473 indicates the PA match detection operation performed in cycle "5" in the first pipeline 70, and 474 indicates the PA match detection operation performed in cycle "4" in the second pipeline 80. The operations 471 and 474 are the PA match detection operations performed in the same clock cycle. Since the PA match detection is performed against each entry in the LB 160, as illustrated in Fig. 7, two PA match detection operations can be executed simultaneously in the same clock cycle.

In this way, when the L2 cache RAM is divided into banks, read and write operations are not performed simultaneously to the same L2 cache RAM in the same clock cycle, but the second flow is executed with a delay of one cycle, and the PA match detection that can be performed in the same clock cycle in different pipeline processes is executed, which serves to reduce the idle period of the circuit.

```
10 ... PROCESSOR CORE
13 ... REGISTER
60 ... PIPELINE SELECTOR
61 ... FIRST PRIORITY CONTROL CIRCUIT
62 ... SECOND PRIORITY CONTROL CIRCUIT
63 ... MO PORT
64 ... LD PORT
66 ... PF PORT
70 ... FIRST PIPELINE
80 ... SECOND PIPELINE
90 ... L2 CACHE CONTROLLER
100 ... PROCESSING APPARATUS
110 ... L2 CACHE RAM
120 ... L2 DATA RAM
140 ... L2 TAG RAM
160 ... LOAD BUFFER
170 ... HIT BUFFER
220 ... MAIN STORAGE UNIT
```

**Claims**

1. A processor connected to a main storage unit, comprising:

   a first storage unit that stores a portion of data stored in the main storage unit;
   a processing unit that outputs an instruction for loading data stored in the main storage unit into the first storage unit;
   a second storage unit that receives an instruction, and that holds the instruction until the first storage unit receives the data requested by the instruction from the main storage unit;
   a first control unit that receives an instruction from the processing unit, and reads the data requested by the received instruction from the first storage unit and transfers the requested data to the processing unit, when the requested data is stored in the first storage unit, or else, transfers the received instruction to the main storage unit, when the requested data is not stored in the first storage unit and an instruction requesting the same data as the requested data is not found in the second storage unit; and
   a second control unit that receives an instruction from the processing unit, and completes processing for reading the data requested by the received instruction from the main storage unit, when an instruction requesting the same data as the requested data is stored in the second storage unit.

2. The processor according to claim 1, wherein the second control unit checks for a match between the instruction received by the second control unit and the instruction stored in the second storage unit, in a cycle other than a cycle where the first control unit checks for a match between the instruction received by the first control unit and the instruction stored in the second storage unit.

3. The processor according to claim 1 or 2, wherein the first control unit performs a write operation to store data in the first storage unit, in a cycle other than a cycle where the first control unit performs a read operation to read data stored in the first storage unit.

4. The processor according to any one of claims 1 to 3, wherein the first storage unit includes a third storage unit and a fourth storage unit formed by dividing the first storage unit into banks of memory, and the second storage unit includes a fifth storage unit that stores an instruction for requesting data stored in the third storage unit, and a sixth storage unit that stores an instruction for requesting data stored in the fourth storage unit, and wherein the first control unit performs a write operation to store data in the fifth storage unit, in the same cycle as the cycle where the first control unit performs a read operation to read data stored in the third storage unit.

5. The processor according to any one of claims 1 to 4, wherein an instruction completion notification by the first control unit and an instruction completion notification by the second control unit are performed in the same cycle.

6. The processor according to any one of claims 1 to 5, further comprising a third control unit that receives an instruction from the processing unit and transfers the instruction to the first control unit and the second control unit, and wherein
when an instruction requesting the same data as the data requested by the received instruction is not found in the second storage unit, the second control unit aborts the processing for reading the requested data from the main storage unit by the received instruction, and
when the second control unit has aborted the processing of the instruction or is in the process of processing the instruction, the third control unit does not transfer the instruction to the second control unit but transfers the instruction to the first control unit.

7. The processor according to any one of claims 1 to 6, wherein the third control unit transfers the instruction to the first control unit and the second control unit, and supplies a control signal for processing the instruction to the first control unit or the second control unit, thereby causing the first control unit or the second control unit to execute the processing of the instruction.

8. The processor according to any one of claims 1 to 7, wherein when the first control unit has detected that the data requested by the instruction resides in the first storage unit, the first control unit stores an address of the detected data in the second storage unit, and
when the address of the data requested by the instruction is the same as the address of the detected data stored in the second storage unit, the second control unit completes the processing for reading the requested data from the main storage unit by the instruction.

# FIG.1

EP 2 518 632 A1

# FIG.2

| 12 | 13 | 14 |
| --- | --- | --- |
| IU | REGISTER | EU |

INSTRUCTION PIPELINE 15

L1 CACHE RAM 16

L1 CACHE CONTROLLER 18

INSTRUCTION

D INSTRUCTION   D INSTRUCTION

DATA     DATA

D INSTRUCTION

OPERATION RESULT,
LOAD INSTRUCTION,
ETC.

INSTRUCTION DATA

OPERATION RESULT

LOAD INSTRUCTION, ETC.

LOAD INSTRUCTION, ETC.

DATA/COMPLETION NOTIFICATION

L2 CACHE CONTROLLER 90

EP 2 518 632 A1

# FIG.3

8B

16a — | A0(i) | A1(i) | A2(i) | A3(i) | - - - - -

REGISTER LOAD
INSTRUCTION →

8B

| R0 | ⟋ 13a |
|------|
| R1 |
| R2 |
| R3 |
| R4 |
| R5 |
| R6 |
| R7 |
| R8 |
| R9 |
| R10 |
| R11 |
| R12 |
| R13 |
| R14 |
| R15 |

MAIN STORAGE
UNIT 220 ————

L2 CACHE RAM
PREFETCH INSTRUCTION →

128B

| A0(i+M) | A0(i+M)+32B | A0(i+M)+64B | A0(i+M)+96B |
|---------|-------------|-------------|-------------|

111a

EP 2 518 632 A1

# FIG. 4

TAG[46:19]

EP 2 518 632 A1

# FIG.5

EP 2 518 632 A1

## FIG.6

EP 2 518 632 A1

# FIG.7

EP 2 518 632 A1

# FIG.8

EP 2 518 632 A1

# FIG.9A

EP 2 518 632 A1

# FIG.9B

160-3

| Valid | HLD | req_issued | ms_cplt | mo_cplt | PA | CODE | PF | L1_LBID | CORE_ID | L2_WAY_ID |
|-------|-----|-----------|---------|---------|-----|------|------|---------|---------|-----------|
| Valid_0 | HLD_0 | req_issue0 | ms_cplt_0 | mo_cplt_0 | PA0 | code_0 | PF_0 | L1_LBID_0 | CORE_ID_0 | L2_WAYID_0 |
| ⋮ | ⋮ | ⋮ | ⋮ | ⋮ | ⋮ | ⋮ | ⋮ | ⋮ | ⋮ | ⋮ |
| Valid_5 | HLD_5 | req_issue5 | ms_cplt_5 | mo_cplt_5 | PA5 | code_5 | PF_5 | L1_LBID_5 | CORE_ID_5 | L2_WAYID_5 |
| Valid_6 | HLD_6 | req_issue6 | ms_cplt_6 | mo_cplt_6 | PA6 | code_6 | PF_6 | L1_LBID_6 | CORE_ID_6 | L2_WAYID_6 |
| Valid_7 | HLD_7 | req_issue7 | ms_cplt_7 | mo_cplt_7 | PA7 | code_7 | PF_7 | L1_LBID_7 | CORE_ID_7 | L2_WAYID_7 |

EP 2 518 632 A1

# FIG.10A

EP 2 518 632 A1

# FIG.10B

160-3b

| Valid | Hit_Valid | HLD | req_issued | ms_cplt | mo_cplt | PA | CODE | PF | L1_LBID | CORE_ID | L2_WAY_ID |
|---|---|---|---|---|---|---|---|---|---|---|---|
| Valid_0 | Hit_Valid_0 | HLD_0 | req_issue0 | ms_cplt_0 | mo_cplt_0 | PA0 | code_0 | PF_0 | L1_LBID_0 | CORE_ID_0 | L2_WAYID_0 |
| ⋮ | ⋮ | ⋮ | ⋮ | ⋮ | ⋮ | ⋮ | ⋮ | ⋮ | ⋮ | ⋮ | ⋮ |
| Valid_5 | Hit_Valid_5 | HLD_5 | req_issue5 | ms_cplt_5 | mo_cplt_5 | PA5 | code_5 | PF_5 | L1_LBID_5 | CORE_ID_5 | L2_WAYID_5 |
| Valid_6 | Hit_Valid_6 | HLD_6 | req_issue6 | ms_cplt_6 | mo_cplt_6 | PA6 | code_6 | PF_6 | L1_LBID_6 | CORE_ID_6 | L2_WAYID_6 |
| Valid_7 | Hit_Valid_7 | HLD_7 | req_issue7 | ms_cplt_7 | mo_cplt_7 | PA7 | code_7 | PF_7 | L1_LBID_7 | CORE_ID_7 | L2_WAYID_7 |

EP 2 518 632 A1

# FIG.11

| CLOCK CYCLE | 0 | 1 | 2 | 3 | 4 | 5 | 6 | 7 | 8 | 9 | 10 | 11 |
|---|---|---|---|---|---|---|---|---|---|---|---|---|
| PIPELINE PROCESSING (FIRST FLOW) 401 BY FIRST PIPELINE 70 | RR | PD1 | PD2 | PI | TR | CD | RP | RN | TI | (TW) | | |
| | | | | LP | (LD) | LT | | | | | | |
| PIPELINE PROCESSING (SECOND FLOW) 402 BY FIRST PIPELINE 70 | | | RR | PD1 | PD2 | PI | TR | CD | RP | RN | TI | TW |
| | | | | | LP | LD | LT | | | | | |
| PIPELINE PROCESSING (THIRD FLOW) 403 BY FIRST PIPELINE 70 | | | | | RR | PD1 | PD2 | PI | (TR) | CD | RP | RN |
| | | | | | | | LP | LD | LT | | | |
| PIPELINE PROCESSING (FOURTH FLOW) 404 BY FIRST PIPELINE 70 | | | | | | | RR | PD1 | PD2 | PI | (TR) | CD |
| | | | | | | | | | LP | LD | LT | |
| PIPELINE PROCESSING 451 BY SECOND PIPELINE 80 | RR | PD1 | PD2 | (LD) | RP | | | RN | | | | |
| | | | LP | | | | | | | | | |
| PIPELINE PROCESSING 461 BY SECOND PIPELINE 80 | RR | PD1 | PD2 | | LP | (LD) | RP | RN | | | | |

414 411 412 413 452 462

EP 2 518 632 A1

# FIG.12

| CLOCK CYCLE | 0 | 1 | 2 | 3 | 4 | 5 | 6 | 7 | 8 | 9 | 10 | 11 |
|---|---|---|---|---|---|---|---|---|---|---|---|---|
| PIPELINE PROCESSING (FIRST FLOW) 401a BY FIRST PIPELINE 70 | RR | PD1 | PD2 | PI | TR | CD | RP | RN | TI | TW | | |
| | | | | LP | LD | LT | | | | | | |
| PIPELINE PROCESSING 401b BY SECOND PIPELINE 80 | RR | PD1 | PD2 | LD | RP | | | RN | | | | |
| | | | LP | | | | | | | | | |
| PIPELINE PROCESSING (FIRST FLOW) 451a BY FIRST PIPELINE 70 | | RR | PD1 | PD2 | PI | TR | CD | RP | RN | TI | TW | |
| | | | | | LP | LD | LT | | | | | |
| PIPELINE PROCESSING 451b BY SECOND PIPELINE 80 | | RR | PD1 | PD2 | LD | RP | | | RN | | | |
| | | | | LP | | | | | | | | |

EP 2 518 632 A1

**INTERNATIONAL SEARCH REPORT**

International application No.

PCT/JP2009/071594

A. CLASSIFICATION OF SUBJECT MATTER
*G06F12/08*(2006.01)i

According to International Patent Classification (IPC) or to both national classification and IPC

B. FIELDS SEARCHED

Minimum documentation searched (classification system followed by classification symbols)
G06F12/08-12/12

Documentation searched other than minimum documentation to the extent that such documents are included in the fields searched
Jitsuyo Shinan Koho          1922-1996     Jitsuyo Shinan Toroku Koho    1996-2010
Kokai Jitsuyo Shinan Koho    1971-2010     Toroku Jitsuyo Shinan Koho    1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2009/104240 A1  (Fujitsu Ltd.),<br>27 August 2009 (27.08.2009),<br>entire text; all drawings<br>(Family: none) | 1 |
| Y | JP 4160589 B2  (Fujitsu Ltd.),<br>01 October 2008 (01.10.2008),<br>entire text; all drawings<br>& US 2008/0294867 A1     & EP 1944696 A1<br>& WO 2007/052369 A1      & KR 10-2008-0063484 A<br>& CN 101300555 A | 1 |
| A | JP 2006-48181 A  (Fujitsu Ltd.),<br>16 February 2006 (16.02.2006),<br>entire text; all drawings<br>& US 2006/0026363 A1     & EP 1622029 A2 | 1-8 |

☒ Further documents are listed in the continuation of Box C.     ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>03 September, 2010 (03.09.10) | Date of mailing of the international search report<br>14 September, 2010 (14.09.10) |
|---|---|
| Name and mailing address of the ISA/<br>Japanese Patent Office | Authorized officer |
| Facsimile No. | Telephone No. |

Form PCT/ISA/210 (second sheet) (July 2009)

| | INTERNATIONAL SEARCH REPORT | International application No. |
|---|---|---|
| | | PCT/JP2009/071594 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-48182 A  (Fujitsu Ltd.),<br>16 February 2006 (16.02.2006),<br>entire text; all drawings<br>& US 2006/0026362 A1    & EP 1622027 A2 | 1-8 |
| A | JP 5-143451 A  (Hitachi, Ltd.),<br>11 June 1993 (11.06.1993),<br>entire text; all drawings<br>(Family: none) | 1-8 |
| A | JP 2003-162446 A  (NEC Electronics Corp.),<br>06 June 2003 (06.06.2003),<br>entire text; all drawings<br>(Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006040090 A
- JP 2000339157 A